(19) Europäisches Patentamt / European Patent Office / Office européen des brevets

(11) **EP 3 398 740 B1**

(12) **EUROPÄISCHE PATENTSCHRIFT**

(45) Veröffentlichungstag und Bekanntmachung des Hinweises auf die Patenterteilung:
**01.01.2020   Patentblatt 2020/01**

(21) Anmeldenummer: **18157338.7**

(22) Anmeldetag: **19.02.2018**

(51) Int Cl.:
**B26D 1/06** (2006.01)     **B26D 1/02** (2006.01)
**B26D 5/14** (2006.01)     **B65H 35/00** (2006.01)
**B21F 11/00** (2006.01)     **B29D 30/46** (2006.01)
**B23D 15/08** (2006.01)     **B26D 1/08** (2006.01)
**B26D 1/00** (2006.01)

(54) **SCHNEIDEINRICHTUNG ZUM SCHNEIDEN EINES ENDLOSBANDS, INSBESONDERE EINES STAHL- ODER TEXTILCORDBANDS**

CUTTING DEVICE FOR CUTTING AN ENDLESS TAPE, IN PARTICULAR A SECTION OF A STEEL OR TEXTILE CORD TAPE

DISPOSITIF DE COUPE PERMETTANT DE COUPER UNE BANDE SANS FIN, EN PARTICULIER UNE BANDE RENFORCÉE TEXTILE OU UNE BANDE EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2017   DE 102017109459**
**03.05.2017   DE 202017102617 U**

(43) Veröffentlichungstag der Anmeldung:
**07.11.2018   Patentblatt 2018/45**

(73) Patentinhaber: **Karl Eugen Fischer Gesellschaft mit beschränkter Haftung**
**96224 Burgkunstadt (DE)**

(72) Erfinder:
• **KLENNER, Ralf**
  **96272 Hochstadt (DE)**
• **LINDNER, Stefan**
  **95326 Kulmbach (DE)**

(74) Vertreter: **Lindner Blaumeier**
**Patent- und Rechtsanwälte**
**Partnerschaftsgesellschaft mbB**
**Dr. Kurt-Schumacher-Str. 23**
**90402 Nürnberg (DE)**

(56) Entgegenhaltungen:
**EP-A1- 2 139 634     DE-B3-102007 025 384**
**GB-A- 1 128 457**

EP 3 398 740 B1

**Beschreibung**

Die Erfindung betrifft eine Schneideinrichtung zum Schneiden eines Endlosbands, insbesondere eines Stahl- oder Textilcordbands, umfassend eine Messeranordnung umfassend ein über eine Antriebseinrichtung bewegbares Obermesser sowie ein diesem zugeordnetes positionsfestes Untermesser, sowie ein der Messeranordnung nachgeschaltetes, einen geschnittenen Bandabschnitt aufnehmendes Transportband, das mit seinem Obertrum unter einem Winkel zur Horizontalen verläuft, wobei ein im Bereich der Messeranordnung befindlicher Abschnitt des Obertrums mittels einer Verstelleinrichtung umfassend ein unterhalb des Obertrums angeordnetes, um eine Achse schwenkbares Unterstützungsbauteil zwischen der unter dem Winkel verlaufenden Stellung und einer im Wesentlichen horizontalen Stellung verstellbar ist.

Eine solche Schneideinrichtung ist beispielsweise aus DE 10 2007 025 384 B3 bekannt. Ein von einer Bandmaterialrolle abgewickeltes Endlosband wird mit einer Materialzange einer Greifereinrichtung an der vorlaufenden Bandmaterialkante gegriffen, wonach die Materialzange zurückgezogen wird und dabei das gegriffene Band mitnimmt. Dieses wird dabei durch eine Messeranordnung gezogen, die zum Abschneiden von Abschnitten des Endlosbands dient. Die Messeranordnung weist ein stehendes Untermesser und ein relativ zu diesem bewegbares Obermesser auf, das üblicherweise unter einem Winkel zum horizontal verlaufenden Untermesser steht, so dass sich beim Schneiden eine Scherwirkung ergibt. Unmittelbar hinter der Messeranordnung, gesehen in Durchzugsrichtung des Bandes, ist ein Transportband angeordnet, das den abgeschnittenen Bandabschnitt aufnimmt. Da infolge der oberhalb des Transportbands bewegten Materialzange das Transportband etwas niedriger liegt als das Bandmaterial eingezogen wird bzw. in der Schneidebene beim Schneiden liegt, ist zur Vermeidung, dass das geschnittene Band auf das Transportband fällt und sich gegebenenfalls verwindet, eine Verstelleinrichtung vorgesehen, mit der die räumliche Lage eines Abschnitts des Obertrums des Transportbands im Bereich der Messeranordnung verstellt werden kann. Das Transportband verläuft mit seinem Obertrum unter einem Winkel zur Horizontalen, also etwas schräg relativ zur horizontalen Ausrichtung der Schneidkante. Mit der aus DE 10 2007 025 384 B3 bekannten Verstelleinrichtung ist es nun möglich, diesen Obertrumabschnitt aus seiner schräg verlaufenden räumlichen Position anzuheben, so dass er im Wesentlichen horizontal verläuft, sich also mithin der Abstand zwischen der Aufnahmeebene des Obertrums und der Schneidebene hierüber verringern lässt. Hierzu weist die Verstelleinrichtung ein um eine Achse schwenkbares Unterstützungsbauteil, beispielsweise ein Unterstützungsblech oder einen Unterstützungsrahmen, auf. Die Verstellung des Unterstützungsbauteils geschieht in DE 10 2007 025 384 B3 mittels eines Stellzylinders, der hydraulisch oder pneumatisch verstellt wird, das heißt, dass er über einen Fluiddruck oder einen Luftdruck gesteuert zum Anheben des Unterstützungsbauteils ausgefahren und zum Absenken wieder eingefahren wird. Diese hydraulische oder pneumatische Steuerung ist jedoch einerseits relativ träge, da für die jeweilige Stellbewegung Hydraulikfluid oder Druckluft gefördert werden muss. Diese Trägheit wirkt sich nachteilig auf die Verstellgeschwindigkeit aus, was sich wiederum als gegebenenfalls limitierender Faktor für die Schneidgeschwindigkeit respektive die Taktung der einzelnen Schnitte auswirkt. Darüber hinaus sind derartige Hydraulik- oder Pneumatikzylinder nicht unbedingt in der Lage, das Unterstützungsbauteil auch exakt zu positionieren.

Der Erfindung liegt damit das Problem zugrunde, eine demgegenüber verbesserte Schneideinrichtung anzugeben.

Zur Lösung dieses Problems ist bei einer Schneideinrichtung der eingangs genannten Art erfindungsgemäß vorgesehen, dass sowohl die Antriebseinrichtung als auch die Verstelleinrichtung einen Antriebsmotor und einen über diesen betätigbaren Kurbeltrieb umfasst.

Bei der erfindungsgemäßen Schneideinrichtung ist sowohl das Obermesser als auch das Unterstützungsbauteil über eine rein mechanische Bewegungseinheit verstellbar. Sowohl die Antriebseinrichtung des Obermessers als auch die Verstelleinrichtung des Obertrums weisen jeweils einen Kurbeltrieb auf, der von jeweils einem Antriebsmotor in Form eines Elektromotors angetrieben wird. Das heißt, dass die Verstellbewegung des Obermessers und des Unterstützungsbauteils über eine rein mechanische Zwangskopplung zum Antriebsmotor, der den Kurbeltrieb betätigt, erfolgt. Über einen solchen Kurbeltrieb können daher, nachdem der Antriebsmotor über ein entsprechend breites Drehzahlband arbeitet, auch höhere Drehzahlen gefahren werden, die über die mechanische Verbindung des Antriebsmotors zum Obermesser respektive dem Unterstützungsbauteil unmittelbar in die Bewegung des Obermessers respektive des Unterstützungsbauteils eingehen. Aufgrund der mechanischen Verbindung ergeben sich insbesondere auch bei der Verstelleinrichtung, die bisher pneumatisch oder hydraulisch gearbeitet hat, keinerlei Verluste infolge einer Trägheit des Stellelements oder Positionierungsungenauigkeiten, nachdem der Kurbeltrieb stets dieselbe Bewegung durchführt und damit zwangsläufig stets ein gleichbleibendes Bewegungsprofil abgefahren wird.

Insgesamt ermöglicht folglich die Auslegung der Antriebseinrichtung sowie der Verstelleinrichtung in Form eines elektrischen Antriebsmotors mit den Antriebsmotor und das Obermesser respektive das Unterstützungsbauteil koppelndem Kurbeltrieb einerseits eine sehr schnelle Arbeitsweise sowohl seitens der Messeranordnung als auch der Verstelleinrichtung, andererseits aber auch eine sehr präzise Positionierung, wobei sich diese Vorteile insbesondere seitens der Verstelleinrichtung, die bisher wie beschrieben hydraulisch oder pneumatisch arbeitete, zeigen. Dadurch, dass erfindungsgemäß sowohl die Antriebseinrichtung als auch die Verstelleinrichtung rein mechanisch über den Elektromotor angetrieben arbeiten, sind folglich beide gleichartig ausgelegt und in vergleichbarer Weise leistungsfähig.

Die Bewegungen des Obermessers und des Unterstützungsbauteils sind bevorzugt derart synchronisiert, dass der vertikale Abstand der Schneidkante des Obermessers zur Oberfläche des Obertrumabschnitts in jedem Schnittpunkt während des Schnitts nahezu gleich ist, so dass der geschnittene Bandabschnitt über die gesamte Schnittlänge stets dieselbe Strecke bis zur Ablage auf dem Obertrumabschnitt zurücklegt. Der Abstand soll möglichst klein sein.

In Weiterbildung der Erfindung ist vorgesehen, dass der jeweilige Kurbeltrieb wenigstens einen über den Antriebsmotor bewegbaren, gelagerten Hebel sowie ein an diesem schwenkbar angeordnetes Schubelement, das mit dem Obermesser bzw. dem Unterstützungsbauteil gekoppelt ist, umfasst. Die mechanische Kopplung, also der Kurbeltrieb, umfasst zwei Bauteile, nämlich einen Hebel, der mit der Antriebswelle des Antriebsmotors verbunden ist sowie ein Schubelement, das schwenkbar am Hebel angeordnet ist, und das mit seinem anderen Ende mit dem Obermesser respektive dem Unterstützungsbauteil gekoppelt ist. Eine Rotation der Antriebswelle des Motors führt unmittelbar zu einer Hebelrotation, die wiederum unmittelbar auf das Schubelement gegeben wird, und über dieses unmittelbar an das Obermesser respektive das Unterstützungsbauteil. Innerhalb dieser mechanischen Kopplung sind ersichtlich keine dämpfenden oder energieverzehrenden Elemente zwischengeschaltet, so dass demzufolge ein Betrieb des Antriebsmotors unmittelbar zu einer entsprechenden Reaktion seitens des Obermessers respektive des Unterstützungsbauteils führt.

Da das Obermesser eine Breite bis zu mehreren Metern aufweisen kann, und da auch das Transportband und das ihm zugeordnete Unterstützungsbauteil eine entsprechende Breite aufweisen kann, ist es zweckmäßig, das Obermesser sowie Unterstützungsbauteil beidseits mit dem Kurbeltrieb zu koppeln, weshalb zweckmäßigerweise der jeweilige Antriebsmotor mit einer sich beidseits davon erstreckenden Antriebswelle gekoppelt ist oder eine solche aufweist, an der beidseits jeweils ein Hebel mit jeweils einem Schubelement angeordnet ist. Das Obermesser sowie das Unterstützungsbauteil sind folglich zu beiden Seiten über eine entsprechende Verbindungsmechanik mit dem Antriebsmotor gekoppelt, werden also zu beiden Seiten jeweils synchron geführt.

Dabei kann die Antriebseinrichtung derart ausgeführt sein, dass der Antriebsmotor und damit der oder die Hebel zur Durchführung eines Schnitts um 360° rotieren. Das heißt, dass der Antriebsmotor stets in einer Richtung dreht, um die Abwärts- und Aufwärtsbewegung des Obermessers zu erwirken. Eine Umsteuerung ist also nicht erforderlich. Auch die Verstelleinrichtung kann derart ausgeführt sein, dass der Antriebsmotor und damit der oder die Hebel um 360° rotieren. Dies ist möglich, wenn durch die Synchronisierung zwischen Antriebseinrichtung und Verstelleinrichtung sichergestellt ist, dass es zu keiner Kollision des Obermessers und des angehobenen Obertrums respektive Unterstützungsbauteil, das während des Schnitts kontinuierlich abgesenkt wird, kommt. Alternativ ist es denkbar, dass der Antriebsmotor der Verstelleinrichtung nur um einen Winkel < 180°, insbesondere um annähernd 90° rotiert. In diesem Fall verschwenkt folglich der Antriebsmotor den oder die Hebel nur um einen gewissen Winkelbereich, der erforderlich ist, um die erforderliche Verstellbewegung, also das Anheben und Absenken des Unterstützungsbauteils und damit des Obertrums, im erforderlichen Maß zu gewährleisten. Eine Bewegung über dieses erforderliche Maß hinaus erfolgt hier nicht, das heißt, dass der oder die Hebel und damit das oder die Schubelemente nur in bestimmten Winkelabschnitten rotieren respektive nur bestimmte Linearbewegungen durchführen. Hierüber kann auf einfache Weise sichergestellt werden, dass es in keinem Fall zu etwaigen Kollisionen kommt.

Das oder die Schubelemente der Antriebseinrichtung sind bevorzugt Schubstangen, wobei es sich bei diesen nicht zwingend um lineare Bauteile handeln muss, es können auch gebogene Bauteile sein, auch in Plattenform oder Ähnliches, in jedem Fall jedoch in sich steife Bauteile, die eine Kraft- und Momentenübertragung zum Obermesser hin ermöglichen. Auch das oder die Schubelemente der Verstelleinrichtung können Schubstangen sein, wobei in diesem Fall bevorzugt lineare Stangen verwendet werden. Solche Schubstangen sind insbesondere dann einsetzbar, wenn die Hebelrotation um einen Winkel < 180°, insbesondere um annähernd 90° erfolgt. Für den Fall, dass der Antriebsmotor und damit der oder die Hebel um 360° rotieren, ist es zweckmäßig, eine Sicherheitsfunktion gegen eine im Falle von Steuerungsfehlern oder dergleichen auftretende Kollision des Obermessers mit dem Unterstützungsbauteil vorzusehen. In diesem Fall kann als Schubelement seitens der Verstelleinrichtung ein Druckzylinder umfassend ein Überdruckventil vorgesehen sein. Dieser z. B. als Gasdruckzylinder ausgeführte Druckzylinder ist ein rigides, also steifes Bauteil, das im normalen Betrieb als steifes Schubelement dient und unmittelbar die Hebelbewegung auf das Unterstützungsbauteil überträgt. Für den Fall jedoch, dass es zu einer Kollision kommt, kann der Druckzylinder über das Überdruckventil etwas nachgeben, so dass es im Kollisionsfall zu keiner Beschädigung seitens des Kurbeltriebes kommt.

Als Antriebsmotoren werden bevorzugt Getriebemotoren verwendet. Diese lassen eine sehr schnell und insbesondere hoch präzise Bewegung und Positionierung des Obermessers sowie des Unterstützungsbauteils zu.

Wie beschrieben ist über die Verstelleinrichtung das Obertrum in seiner räumlichen Ausrichtung veränderbar, es kann zwischen einer quasi abgesenkten, schräg zur Horizontalen verlaufenden Position und einer angehobenen, im Wesentlichen horizontal verlaufenden Position verstellt werden. Im Rahmen des Betriebs wird das Obertrum vor dem eigentlichen Schnitt in die Horizontalposition angehoben. Während des Schnitts wird es sodann abgesenkt, es folgt also quasi der Messerabsenkung, so dass das sukzessive eingeschnittene Band sich sukzessive auf dem sich absenkenden Obertrum ablegen kann. Um nun diese Ablegebewegung über die gesamte Schnittlänge möglichst homogen und gleichmäßig zu gestalten, so dass folglich das sukzessive geschnittene Bandmaterial an jedem Schnittpunkt nahezu denselben Abstand zum Obertrum aufweist respektive um nahezu denselben Weg in Richtung des Obertrums fällt, sieht eine besonders zweckmäßige Weiterbildung der Erfindung vor, dass die beiden Kurbeltriebe über die beiden Antriebsmotoren derart betreibbar sind, dass zumindest während der Zeit zwischen dem Einschnitt des Obermessers in das Band und dem Schnittende die Winkelgeschwindigkeit des oder der rotierenden Hebel der Verstelleinrichtung im Wesentlichen gleich der Winkelgeschwindigkeit des oder der rotierenden Hebel der Antriebseinrichtung ist. Das heißt, dass erfindungsgemäß die beiden Antriebsmotoren, die derart arbeiten, dass sich seitens der Hebel der Verstelleinrichtung und der Antriebseinrichtung nahezu gleiche Winkelgeschwindigkeiten einstellen, diese also mit nahezu dergleichen Drehzahl rotieren. Dies führt dazu, dass eine weitgehende Synchronisierung der Messerbewegung und der Bewegung des Unterstützungsbauteils erreicht wird. Dies führt nun wiederum dazu, dass während der Absenkbewegung des Obermessers während des Schnitts und der zeitgleich erfolgenden Absenkbewegung des Unterstützungsbauteils und damit des Obertrums in jedem Schnittpunkt der Abstand des Schnittpunkts zum vertikal darunter befindlichen Punkt auf der Oberseite des Obertrums nahezu gleich bleibt. Während des Schnitts wandert der Schnittpunkt vom Einschnittpunkt, an dem das Obermesser in das Band eintaucht, bis zum Austrittspunkt aus dem durchgeschnittenen Band kontinuierlich von der einen zur anderen Bandkantenseite. Während dieser Schneidbewegung wird ebenfalls kontinuierlich das Obertrum abgesenkt. Aufgrund der Synchronisierung der Winkelgeschwindigkeiten ist nun diese Absenkbewegung des Obertrums derart weitgehend mit der Absenkbewegung des Schneidmessers synchronisiert, dass trotz wanderndem Schnittpunkt sein Abstand zum darunterliegenden, vertikalen Oberflächenpunkt des Obertrums nahezu gleich bleibt. Das heißt, dass das geschnittene, sich auf das Obertrum absenkende Bandstück stets nahezu denselben Weg zurücklegt und sich mithin eine über die gesamte Schnittbreite gleichförmige Absenk- oder Fallbewegung einstellt. Dies ist besonders zweckmäßig, als hierdurch ein durch das Absenken respektive Herabfallen möglicherweise resultierender Verzug im geschnittenen Bandstück oder dergleichen vorteilhaft ausgeschlossen wird.

Dabei können die beiden Kurbeltriebe und die beiden Antriebsmotoren derart betreibbar sein, dass die Winkelgeschwindigkeiten bis zu dem Zeitpunkt, zu dem der oder die rotierenden Hebel der Antriebseinrichtung und der oder die rotierenden Hebel der Verstelleinrichtung gemeinsam den unteren Totpunkt erreicht haben, im Wesentlichen gleich ist. Wie beschrieben kann das Schneidmesser eine Länge von mehreren Metern aufweisen, ebenso zwangsläufig auch das Unterstützungsbauteil. Die Bandbreite respektive die Länge des Schnitts, der auch unter einem Winkel zur Längsrichtung des Bandes erfolgen kann, kann damit zwangsläufig ebenfalls mehrere Meter lang sein. Der jeweilige Schnitt ist jedoch in jedem Fall beendet, wenn das Obermesser seine tiefste Position erreicht hat, was gleich bedeutend mit dem Erreichen des unteren Totpunkts des oder der Hebel der Antriebseinrichtung einhergeht. Daher ist es zweckmäßig, wenn die Winkelgeschwindigkeiten der Hebel der Antriebs- und der Verstelleinrichtung eben bis zum Erreichen der jeweiligen unteren Totpunkte nahezu gleich sind.

Da es sich um separate mechanische Antriebe handelt, ist eine vollkommene Identität der jeweiligen Winkelgeschwindigkeiten nicht unbedingt erreichbar, was möglicherweise auch etwaigen geometrischen Verhältnissen im Bereich der jeweiligen Kurbeltriebe geschuldet ist. Ziel ist jedoch, diese so weit als möglich einander anzunähern. Daher sollten die im Wesentlichen gleichen Winkelgeschwindigkeiten nicht allzu weit voneinander abweichen. Eine Winkelgeschwindigkeitsdifferenz sollte maximal 5 %, vorzugsweise maximal 2 % betragen, das heißt, dass ein gewisser Geschwindigkeitstoleranzbereich gegeben ist, der jedoch so klein als möglich gehalten werden soll.

Im normalen Betrieb startet das Obermesser aus der angehobenen Position, was gleichbedeutend mit der Positionierung des Kurbeltriebs der Antriebseinrichtung mit dem oder den Hebeln im oberen Totpunkt ist. Üblicherweise ist ein intermittierender Betrieb gegeben, das heißt, dass der Kurbeltrieb nach einer 360°-Rotation im oberen Totpunkt kurzzeitig ruht, wonach er wieder andreht, um den nächsten Schnitt durchzuführen. Bis zu dem Zeitpunkt, zu dem das Obermesser das Band einschneidet, ist das Obermesser bereits ein Stück weit abzusenken. Das heißt, dass das Obermesser mit dem Einschnitt bereits seine entsprechende Absenkgeschwindigkeit und damit der oder die Hebel die entsprechende Winkelgeschwindigkeit, die während des gesamten Schnitts konstant bleibt, erreicht haben. Um sicherzustellen, dass zum Einschnittszeitpunkt auch seitens der Verstelleinrichtung die entsprechende, während des gesamten Schnitts ebenfalls konstante Winkelgeschwindigkeit gegeben ist, ist es erforderlich, den ruhenden Kurbeltrieb der Verstelleinrichtung über den Antriebsmotor eine definierte Zeitspanne vor dem Einschnitt des Obermessers das Band zu beschleunigen, derart, dass die Winkelgeschwindigkeit des oder der rotierenden Hebel der Verstelleinrichtung im Zeitpunkt des Einschnitts im Wesentlichen der Winkelgeschwindigkeit des oder der rotierenden Hebel der Antriebseinrichtung entspricht. Das heißt, dass der Kurbeltrieb der Verstelleinrichtung definiert vor dem Einschnitt des Obermessers beschleunigt wird, so dass er zum Zeitpunkt des Einschnitts die erforderliche und während des Schnitts konstante Winkelgeschwindigkeit aufweist.

In Weiterbildung der Erfindung kann vorgesehen sein, dass zumindest der Betrieb des Antriebsmotors der Verstelleinrichtung in Abhängigkeit des Erfassungsergebnisses wenigstens eines Sensorelements, das eine Information betreffend den Bewegungsbetrieb des Obermessers und des zu schneidenden Bandes liefert, steuerbar ist. Das heißt, dass die Verstelleinrichtung quasi der Messerbewegung folgt bzw. auf das einlaufende oder positionierte, zu schneidende Band folgt. Der Sensor erfasst eine entsprechende Information, beispielsweise, dass sich das Schneidmesser aus seiner angehobenen Stellung absenkt respektive der oder die Hebel der Antriebseinrichtung aus dem oberen Totpunkt bewegt werden. Alternativ ist auch eine bandbezogene Information erfassbar. Gestützt auf diese Information wird nun der Zeitpunkt definiert, zu dem der Antriebsmotor der Verstelleinrichtung anläuft, um den Kurbeltrieb anzudrehen respektive zu beschleunigen. Das Sensorelement kann natürlich auch den Zeitpunkt erfassen, zu dem der Antriebsmotor der Antriebseinrichtung angesteuert wird respektive andreht und diesen Zeitpunkt als Triggermoment verwenden.

Neben der Schneideinrichtung selbst betrifft die Erfindung ferner ein Verfahren zum Betrieb einer Schneideinrichtung zum Schneiden eines Endlosbands, insbesondere eines Stahl- oder Textilcordbands, umfassend eine Messeranordnung umfassend ein über eine Antriebseinrichtung bewegbares Obermesser sowie ein diesem zugeordnetes positionsfestes Untermesser, sowie ein der Messeranordnung nachgeschaltetes, einen geschnittenen Bandabschnitt aufnehmendes Transportband, das mit seinem Obertrum und einem Winkel zur Horizontalen verläuft, wobei ein im Bereich der Messeranordnung befindlicher Abschnitt des Obertrums mittels einer Verstelleinrichtung umfassend ein unterhalb des Obertrums angeordnetes, um eine Achse schwenkbares Unterstützungsbauteil zwischen der unter dem Winkel verlaufenden Stellung und einer im Wesentlichen horizontalen Stellung verstellbar ist, wobei verfahrensgemäß sowohl die Antriebseinrichtung als auch die Verstelleinrichtung einen Antriebsmotor und einen Kurbelbetrieb umfasst, wobei der jeweilige Antriebsmotor den jeweiligen Kurbeltrieb antreibt.

Dabei kann der jeweilige Kurbeltrieb einen oder zwei über den Antriebsmotor bewegbare, exzentrisch gelagerte Hebel sowie ein an diesen oder diesen schwenkbar angeordnete Schubelemente, das oder die mit dem Obermesser bzw. dem Unterstützungsbauteil gekoppelt sind, umfassen, wobei der Antriebsmotor der Antriebseinrichtung und damit der oder die Hebel zur Durchführung eines Schnitts um 360° rotieren, und wobei der Antriebsmotor der Verstelleinrichtung und damit der oder die Hebel um 360° oder nur um einen Winkel < 180°, insbesondere um annähernd 90° rotieren.

Besonders bevorzugt ist es für eine Synchronisation der Messer- und der Unterstützungsbauteilbewegung, wenn die beiden Kurbeltriebe über die beiden Antriebsmotoren derart bewegt werden, dass zumindest während der Zeit zwischen dem Einschnitt des Obermessers in das Band und dem Schnittende die Winkelgeschwindigkeit des oder der rotierenden Hebel der Verstelleinrichtung im Wesentlichen gleich der Winkelgeschwindigkeit des oder der rotierenden Hebel der Antriebseinrichtung ist. Die Motoren arbeiten also derart, dass die Hebel die gleiche Winkelgeschwindigkeit respektive gleiche Drehzahl aufweisen, um die Bewegung des Obermessers und des Unterstützungsbauteils während des Schnittes soweit als möglich zu synchronisieren.

Weiterhin kann vorgesehen sein, dass die beiden Kurbeltriebe über die beiden Antriebsmotoren derart bewegt werden, dass die Winkelgeschwindigkeit bis zu dem Zeitpunkt, zu dem der oder die rotierenden Hebel der Antriebseinrichtung und der oder die rotierenden Hebel der Verstelleinrichtung gemeinsam den unteren Totpunkt erreichen, im Wesentlichen gleich ist.

Wenngleich Ziel ist, nahezu identische Winkelgeschwindigkeiten einzustellen, sind diese gegebenenfalls etwas toleranzbehaftet, was mitunter auch auf geometrische Gegebenheiten hinsichtlich der Kurbeltriebe respektive der Anordnung der betroffenen Bauteile zurückzuführen ist. Die Winkelgeschwindigkeiten sollten möglichst gleich sein, die etwaige Abweichung sollte maximal 5 %, vorzugsweise maximal 2 % betragen.

Weiterhin kann vorgesehen sein, dass der ruhende Kurbeltrieb der Verstelleinrichtung über den Antriebsmotor eine definierte Zeitspanne vor dem Einschnitt des Obermessers in das Band beschleunigt wird, so dass die Winkelgeschwindigkeit des oder der rotierenden Hebel der Verstelleinrichtung im Zeitpunkt des Einschnitts im Wesentlichen der Winkelgeschwindigkeit des oder der rotierenden Hebel der Antriebseinrichtung entspricht. Der Kurbeltrieb der Verstelleinrichtung wird also definiert vor dem Einschnitt beschleunigt, so dass nahezu die gleiche Winkelgeschwindigkeit während des gesamten Schnitts gegeben ist.

Schließlich kann vorgesehen sein, dass zumindest der Betrieb des Antriebsmotors der Verstelleinrichtungen in Abhängigkeit des Erfassungsergebnisses wenigstens eines Sensorelements, das eine Information betreffend den Betrieb des Obermessers oder des zu schneidenden Bands liefert, gesteuert wird.

Sämtliche Ausführungen in Bezug auf die erfindungsgemäße Schneideinrichtung gelten gleichermaßen betreffend das erfindungsgemäße Verfahren.

Weitere Vorteile und Einzelheiten der vorliegenden Erfindung ergeben sich aus den im Folgenden beschriebenen Ausführungsbeispielen. Dabei zeigen:

Fig. 1        eine Prinzipdarstellung einer erfindungsgemäßen Schneideinrichtung mit Messeranordnung und Transportband mit angehobenem Obermesser und angehobenem Obertrum,

Fig. 2 die Anordnung aus Fig. 1 mit angehobenem Obertrum und abgesenktem, kurz vor dem Anschnitt befindlichen Obermesser,

Fig. 3 die Anordnung aus Fig. 2 mit abgesenktem Obertrum und nach Durchführung des Schnitts erneut angehobenem Obermessers,

Fig. 4 eine Prinzipdarstellung der Kurbeltriebe der Antriebseinrichtung und der Verstelleinrichtung zu Beginn des Synchronlaufs während des Schnitts,

Fig. 5 eine Prinzipdarstellung entsprechend Fig. 4 im jeweils unteren Totpunkt der Kurbeltriebe am Ende des Synchronlaufs,

Fig. 6 - 9 Prinzipdarstellungen und unterschiedlicher Positionen des Obermessers sowie des Verlaufs der Ausrichtung des Obertrums bezüglich einer Bewegung des Obermessers von der angehobenen in die abgesenkte Stellung, also vom oberen Totpunkt bis zum unteren Totpunkt des Kurbeltriebs der Antriebseinrichtung,

Fig. 10 Diagramme zur Erläuterung des Weg-Zeit-Verhältnisses der beiden Kurbeltriebe hinsichtlich der Rotationsbewegung der jeweiligen Hebel,

Fig. 11 eine Seitenansicht des Antriebsmotors nebst Kurbeltrieb der Verstelleinrichtung im unteren Totpunkt,

Fig. 12 eine Vorderseitenansicht, teilweise geschnitten, der Anordnung aus Fig. 11,

Fig. 13 eine Seitenansicht des Transportbandes nebst Verstelleinrichtung,

Fig. 14 eine Aufsicht auf die Anordnung aus Fig. 13 mit angedeuteter Messeranordnung und zu schneidendem Band,

Fig. 15 eine vereinfachte Draufsicht einer Schneidanlage ohne Slitter, und

Fig. 16 eine vereinfachte Draufsicht einer Schneidanlage mit Slitter.

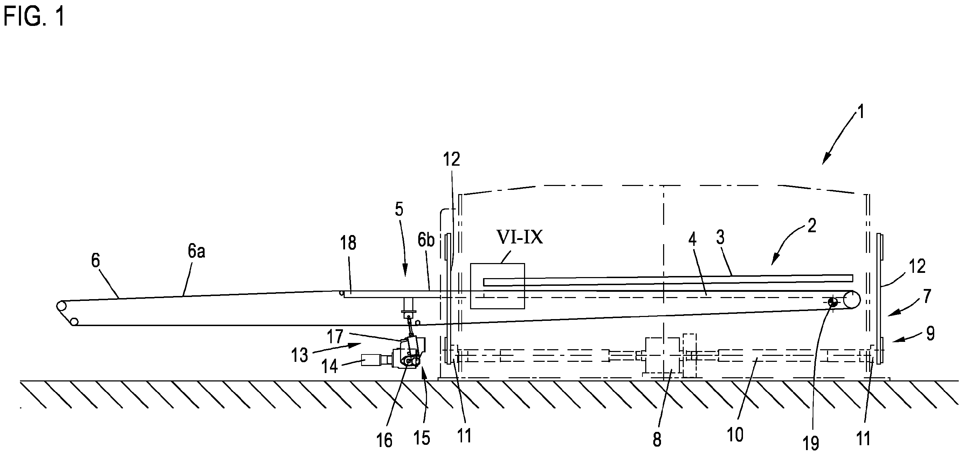

Fig. 1 zeigt eine erfindungsgemäße Schneideinrichtung 1 zum Schneiden eines Endlosbands, insbesondere eines Stahl- oder Textilcordbands, in einer Prinzipdarstellung. Die Schneideinrichtung 1 umfasst eine Messeranordnung 2 mit einem vertikal bewegbaren Obermesser 3, das unter einem leichten Winkel zur Horizontalen verläuft. Die Messeranordnung 2 umfasst des Weiteren ein positionsfestes Untermesser 4, das horizontal verläuft. Zwischen den beiden Messern 3, 4 wird über eine nicht näher gezeigte Vorschubeinrichtung umfassend beispielsweise eine Zugeinrichtung mit einer Greifzange das zu schneidende Endlosband mit dem abzuschneidenden Bandabschnitt hindurchgezogen, woraufhin der Schnitt erfolgt.

Vorgesehen ist des Weiteren ein Abtransportband 5, das ein umlaufendes Band ist und das über mehrere Umlenk- oder Spannrollen geführt ist. Das Transportband 5 weist, da umlaufend, ein Obertrum 6 auf, das von seiner Grundausrichtung her unter einem Winkel zur Horizontalen verläuft, wie im Obertrumabschnitt 6a dargestellt ist. Der Obertrumabschnitt 6b, der benachbart zur Messeranordnung 2 verläuft, ist in dieser Ansicht horizontal angeordnet, nachdem er über eine nachfolgend noch beschriebene Verstelleinrichtung in seiner räumlichen Ausrichtung verändert werden kann. Das Transportband 6 dient dazu, den abgeschnittenen Bandabschnitt aufzunehmen und abzutransportieren. Zur Bewegung des Obermessers 3 ist eine Antriebseinrichtung 7 vorgesehen, umfassend einen Antriebsmotor 8 sowie einen Kurbeltrieb 9. Der Antriebsmotor 8 ist mit einer sich beidseits von ihm erstreckenden Antriebswelle 10 verbunden, wobei an jedem Ende jeweils ein Hebel 11 des Kurbeltriebs 9 angeordnet ist. Die Hebel 11 können über die Antriebswelle 10 durch den Antriebsmotor 8 gedreht werden. An jedem Hebel 11 ist ein Schubelement 12 angeordnet, beispielsweise in Form einer Schubstange. Mit diesen Schubelementen 12 ist sodann das Obermesser 2 gekoppelt, was hier nicht näher dargestellt ist. In jedem Fall ist eine rein mechanische Antriebsverbindung vom Antriebsmotor 8 zum Obermesser 3 gegeben. Der Antriebsmotor rotiert im Betrieb um 360°, so dass über den Kurbeltrieb 9, der auch als Schubkurbeltrieb bezeichnet werden kann, eine definierte Abwärts- und Aufwärtsbewegung während einer 360°-Rotation ausgehend vom oberen Totpunkt der Hebel 11 durch den unteren Totpunkt und wieder zurück zum oberen Totpunkt gegeben ist.

Dem Transportband 6 ist, wie bereits beschrieben, eine Verstelleinrichtung 13 zugeordnet, umfassend einen Antriebsmotor 14, wiederum bevorzugt ein Servomotor, sowie einen Kurbeltrieb 15 (Schubkurbeltrieb) mit einem Hebel 16 und einem Schubelement 17, wobei auch hier beidseits des Antriebsmotors 14 jeweils ein Hebel 16 und ein Schubelement 17 angeordnet ist, worauf nachfolgend noch eingegangen werden wird.

Die Schubelemente 17 sind mit einem Unterstützungsbauteil 18, das unterhalb des Obertrumabschnitts 6b angeordnet ist, und das um eine Schwenkachse 19 verschwenkbar ist, verbunden. Über den Kurbeltrieb 15 kann bei Betrieb des Antriebsmotors das Unterstützungsbauteil 18 angehoben werden, wie in Fig. 1 gezeigt, wo der Obertrumabschnitt 6b in der Horizontalen liegt oder abgesenkt werden, so dass der Obertrumabschnitt 6b unter einem Winkel zur Horizontalen verläuft.

Fig. 1 zeigt die Ausgangssituation vor Beginn eines Schnitts, beispielsweise ist der zu schneidende Bandabschnitt gerade durch die beiden Messer 3, 4 gezogen worden. Die Messeranordnung 2 ist also geöffnet, der Obertrumabschnitt 6b ist in der angehobenen, horizontalen Position.

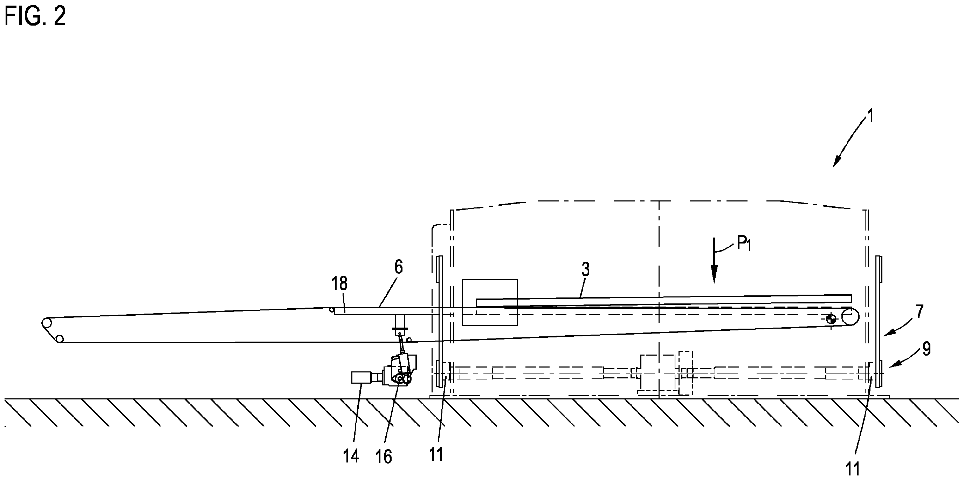

Sodann wird die Antriebseinrichtung 7 respektive der Antriebsmotor 8 angesteuert, um die Obermesserbewegung einzuleiten. Ausgehend von der in Fig. 1 gezeigten Stellung der Hebel 11, die sich dort im oberen Totpunkt befinden, werden diese nun aus dem oberen Totpunkt herausgedreht, was dazu führt, dass das Obermesser 3 über den Kurbeltrieb 9 nach unten bewegt wird, wie durch den Pfeil P1 in Fig. 2 gezeigt. Die links gezeigte Schneidkante des Obermessers 3 befindet sich in der in Fig. 2 gezeigten Position kurz vor dem Einschnitt in das nicht näher gezeigte Band.

Zu diesem Zeitpunkt hat auch der Arbeitsbetrieb der Verstelleinrichtung 13 begonnen, das heißt, dass der Antriebsmotor 14 ebenfalls angefangen hat zu drehen, so dass der Kurbeltrieb 15 ebenfalls beschleunigt wird. Ziel dieser Beschleunigung vor Beginn des eigentlichen Schnittes ist es, sicherzustellen, dass die mit dem Andrehen des Antriebsmotors 14 einsetzende Absenkbewegung des Unterstützungsbauteils 18 und damit des Obertrumabschnitts 6b derart mit der Absenkbewegung des Obermessers 3 soweit als möglich synchronisiert wird, dass sich während des Schnitts, also beginnend mit dem Einschnitt des Obermessers 3 in das Band, bis zum Ende des Schnitts eine synchrone Absenkbewegung von Obermesser 3 und Obertrumabschnitt 6b einstellt, wobei durch Synchronisation der Winkelgeschwindigkeit der Hebel 11 und 16 sichergestellt werden soll, dass einerseits die Winkelgeschwindigkeiten nahezu gleich sind, und andererseits während des gesamten Schnitts in jedem einzelnen Schnittpunkt der Abstand des Schnittpunkts zur Oberseite des Obertrumabschnitts 6b nahezu gleich ist.

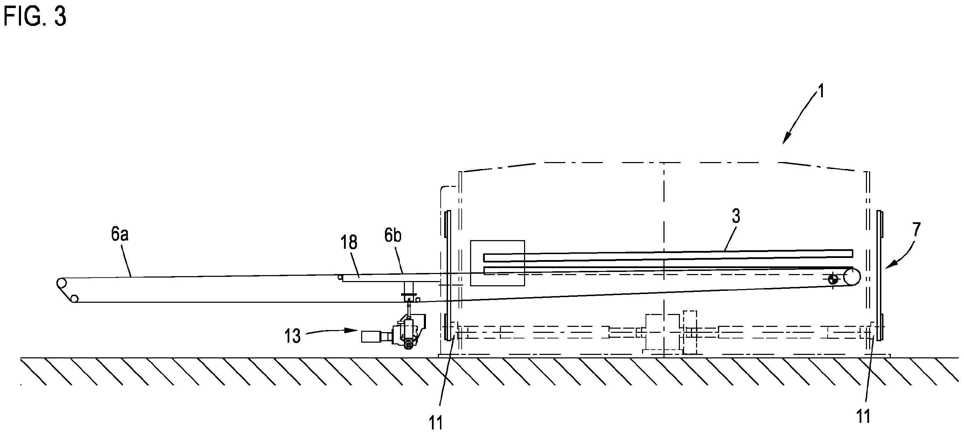

Fig. 3 zeigt sodann die Schneideinrichtung 1 aus Fig. 2, nachdem der Schnitt vollzogen wurde und das Obermesser 3 über die Antriebseinrichtung 7 erneut in die angehobene Stellung gebracht wurde, sich also mithin die beiden Hebel 11 wieder im oberen Totpunkt befinden. Zu diesem Zeitpunkt ist der Obertrumabschnitt 6b und damit das Unterstützungsbauteil 18 abgesenkt, ersichtlich verläuft der Obertrumabschnitt 6b in einer Flucht mit dem Obertrumabschnitt 6a und einem Winkel zur Horizontalen.

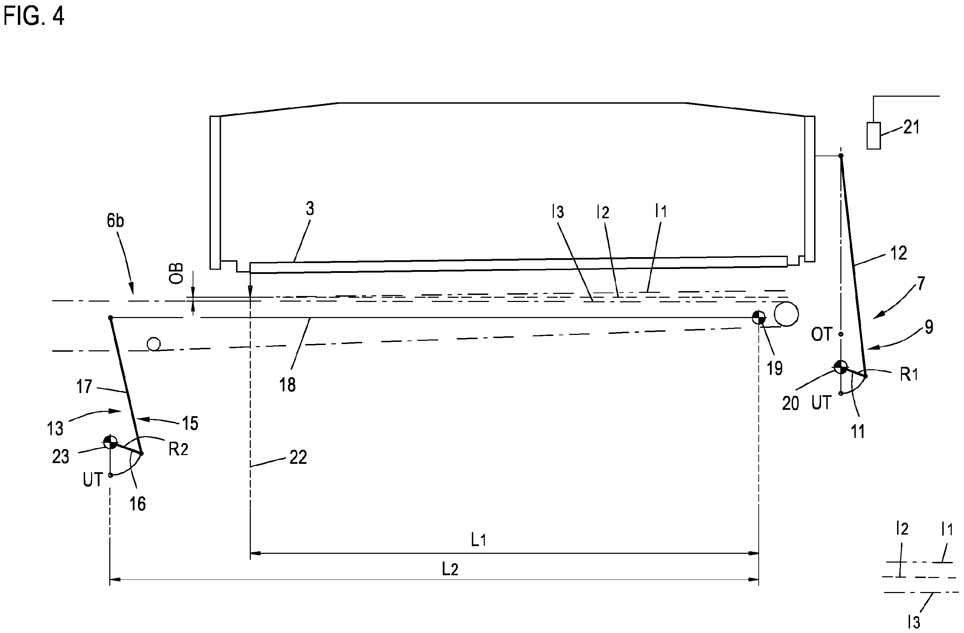

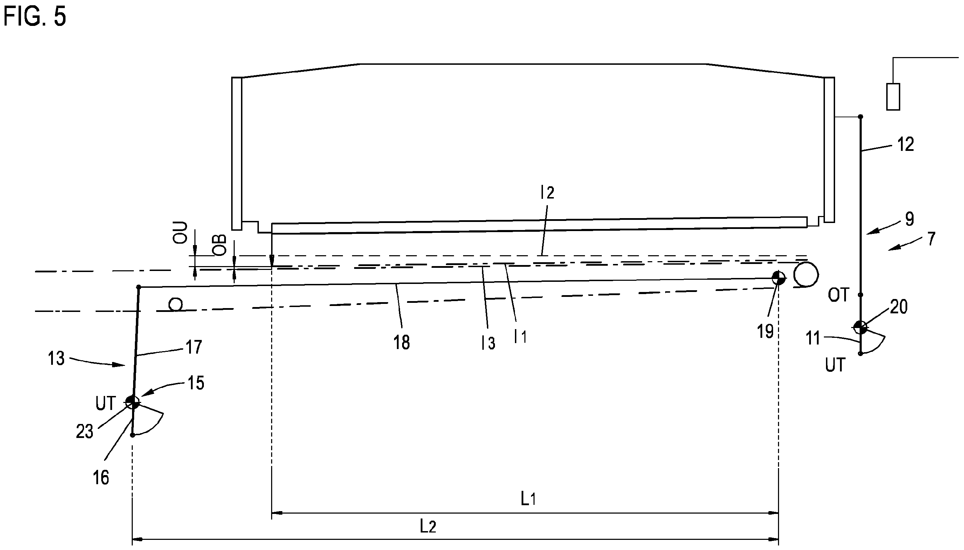

Die Fig. 4 und 5 zeigen zwei Prinzipdarstellungen, die die mechanischen respektive kinematischen Verhältnisse darstellen. Gezeigt ist das Obermesser 3, das aus Gründen der Übersichtlichkeit in angehobener Position gezeigt ist. Zur Erläuterung der Situation im Zeitpunkt des Anschnitts sind die einzelnen relevanten Kanten respektive Ebenen in Form der unterschiedlichen Linien dargestellt. Die Linie $l_1$ stellt den Verlauf der Unterkante des Obermessers zum Einschnittszeitpunkt dar. Die Linie $l_1$ verläuft ersichtlich unter einem geringen Winkel zur Horizontalen.

Die Linie $l_2$, die horizontal verläuft, zeigt die Oberkante des Untermessers, die während des Schnitts positionsfest ist. Die ebenfalls horizontal verlaufende Linie $l_3$ im Bereich der Messeranordnung zeigt den Verlauf der Oberseite des Obertrumabschnitts 6b, der in seiner räumlichen Ausrichtung verstellt werden kann.

Dargestellt ist des Weiteren dem Grunde nach das Unterstützungsbauteil 18, das um die Schwenkachse 19 verschwenkt werden kann, und auf dem der Obertrumabschnitt 6b aufliegt.

Gezeigt ist des Weiteren die Antriebseinrichtung 7 respektive ihr Kurbeltrieb 9 mit dem jeweiligen Hebel 11 und dem Schubelement 12, wobei hier nur ein Hebel 11 und ein Schubelement 12 gezeigt sind. Der Hebel 11 ist um die Drehachse 20 über den Antriebsmotor 8 drehbar. An dieser Stelle der Hinweis, dass der Hebel 11 im Betrieb natürlich senkrecht zur Zeichenebene rotiert und die Drehachse 20 parallel zur Zeichenebene verläuft.

Gezeigt ist des Weiteren die Verstelleinrichtung 13 mit dem Kurbeltrieb 15 umfassend die Hebel 16 sowie die Schubelemente 17, wobei auch hier nur ein Hebel 16 und ein Schubelement 17 dargestellt ist.

Des Weiteren dargestellt ist ein Sensor 21, der eine Information betreffend einen bestimmten Betriebszeitpunkt ermittelt, gestützt auf welche Information die Verstelleinrichtung 13 beginnt, das angehobene Unterstützungsbauteil 18 abzusenken. Es kann sich bei dem Sensor beispielsweise um einen Drehgeber handeln, der eine Rotation des Hebels 11 beispielsweise aus dem oberen Totpunkt heraus erfasst oder einen andersartigen Sensor, der beispielsweise die Position des einlaufenden Bandes und Ähnliches erfasst. Verwendet werden kann jedwede Information, aus der abgeleitet werden kann, zu welchem Zeitpunkt der Antriebsmotor 14 seine Arbeit aufnehmen soll.

Fig. 4 zeigt wie beschrieben die Situation zu Beginn des Anschnitts, also exakt zu dem Zeitpunkt, zu dem die Unterkante $l_1$ des Obermessers 3 die Oberseite des Bandes, das zu schneiden ist, berührt. Der Hebel 11 (nachfolgend wird jeweils nur ein Hebel 11 nebst Schubelement 12 beschrieben, selbstverständlich agiert der zweite Hebel und das zweite Schubelement identisch) wurde aus seinem oberen Totpunkt OT herausbewegt, um das Obermesser 3 abzusenken. Im Einschnittzeitpunkt nimmt er exemplarisch die Stellung gemäß Fig. 4 ein.

Zu diesem Zeitpunkt hat auch der Antriebsmotor 14 den Kurbeltrieb 15 angedreht, der Hebel 16 (auch hier wird nachfolgend von einem Hebel 16 und einem Schubelement 17 gesprochen) befindet sich in der in Fig.

4 gezeigten Position. Er wurde derart beschleunigt, dass von nun an die Winkelgeschwindigkeit des Hebels 16 nahezu identisch zur Winkelgeschwindigkeit des Hebels 11 ist, dass sich also fortan die entsprechenden Hebel 11, 16 mit der gleichen Drehzahl bewegen.

Die beiden Hebel 11, 16 werden ausgehend von den in Fig. 4 gezeigten Schwenkpositionen sodann zum weiteren Absenken der gekoppelten Bauteile nach unten geschwenkt und laufen, siehe Fig. 5, in den unteren Totpunkt UT ein. Ersichtlich liegt die Unterkante $l_1$ des Obermessers 3 nun unterhalb der Oberkante $l_2$ des Untermessers, sie verläuft jedoch nach wie vor unter einem Winkel zur Horizontalen.

Ersichtlich verläuft nun aber auch die Oberseite $l_3$ des Obertrumabschnitts 6b unter einem Winkel, nachdem der Kurbeltrieb 15 das Unterstützungsbauteil 18 sukzessive abgesenkt und um die Drehachse 19 abgeschwenkt hat. Wie Fig. 5 zeigt, verlaufen die Linien $l_1$ und $l_3$ nahezu parallel zueinander.

Wie Fig. 5 zeigt, hat sich die Geometrie der jeweiligen Kurbeltriebe 9, 15 geändert, resultierend aus der jeweiligen Hebelrotation. Dies führte zur jeweiligen Absenkbewegung des Obermessers 3 und des Unterstützungsbauteils 18. Diese jeweilige Bewegung und Synchronisation der entsprechenden Hebelrotation erfolgte unter anderem zu dem Zweck, um sicherzustellen, dass der Abstand der Unterkante des Obermessers 3 zur Oberseite des Obertrumabschnitts 6b während des gesamten Schnitts in Bezug auf den jeweiligen Schnittpunkt, der ausgehend von Fig. 4 nach rechts während des kontinuierlichen Schnitts wandert, stets nahezu gleich bleibt.

In den Fig. 4 und 5 ist mit OB der Abstand der Unterkante des Obermessers 3 zur Oberseite des Obertrumabschnitts 6b dargestellt, und zwar bezogen auf den Punkt respektive die Anschnittslinie 22, die in Fig. 4 und 5 dargestellt ist. Diese Anschnittslinie 22 definiert den Punkt, an dem das Obermesser 3 erstmals auf das zu schneidende Band trifft, also den Einschnittspunkt. Der Abstand OB ist, siehe Fig. 4, in exakt dem Punkt definiert über die Anschnittslinie 22 gegeben. Aufgrund des schrägen Verlaufs der Unterkante des Obermessers 3 und des horizontalen Verlaufs des Obertrumabschnitts 6b wird ersichtlich der Abstand OB nach rechts hin in Fig. 4 immer größer.

Die Anschnittslinie 22 ist stets konstant, unabhängig davon wie breit das Band ist. Sie wird über eine Kante, an der das Band stets anliegt, definiert und ändert sich nicht.

Durch das synchronisierte Absenken des Obermessers 3 und des Unterstützungsbauteils 18, resultierend aus dem Umstand, dass die Winkelgeschwindigkeiten der Hebel 11 und 16 während der Verschwenkbewegung ausgehend von Fig. 4 zu Fig. 5 nahezu identisch sind, resultiert, dass nun mit fortschreitendem Schnitt, während dem sich der Schnittpunkt, an dem das Obermesser und das Untermesser zusammenwirken und das Band schneiden, kontinuierlich von links nach rechts bewegt, in jedem einzelnen Schnittpunkt der Abstand OB nahezu identisch ist. Das heißt, dass ausgehend von Fig. 4 die Anschnittslinie 22 mit fortschreitendem Schnitt permanent nach rechts wandert, jedoch der anschnittslinienbezogene Abstand OB in jedem Zeitpunkt nahezu gleich bleibt, resultierend aus der Absenkung des Obermessers 3 in Verbindung mit der synchronisierten Absenkung des Unterstützungsbauteils 18.

Um dies zu ermöglichen ist der Kurbeltrieb 15 entsprechend auszulegen. Der Kurbeltrieb 9 zum Antrieb des Obermessers 3 ist letztlich bestimmend für die Auslegung des Kurbeltriebs 15 der Verstelleinrichtung 13.

Bezogen auf den Zeitpunkt gemäß Fig. 4, also den Einschnittszeitpunkt, sind einerseits der Abstand der Anschnittslinie 22 zur Schwenkachse 19 des Unterstützungsbauteils 18 bekannt, dieser Abstand ist mit $L_1$ in den Fig. 4 und 5 dargestellt. Gleichermaßen ist auch der Abstand $L_2$ von der Drehachse 23, um die der Hebel 16 zu drehen ist, zur Schwenkachse 19 bekannt.

Ebenfalls bekannt ist die Länge respektive der Radius $R_1$ des Hebels 11.

Es kann nun unter Annahme gleicher Kurbelwinkel der benötigte Radius $R_2$, also die Länge des Hebels 16, wie folgt berechnet werden:

$$R_2 = (R_1/L_1) \times L_2,$$

wobei gilt:

$R_1$ = Radius des Hebels 11
$L_1$ = Abstand Schwenkachse 19 zum Anschnittspunkt bzw. Anschnittslinie 22
$R_2$ = Radius des Hebels 16
$L_2$ = Abstand Schwenkachse 19 zur Drehachse Hebel 16

Durch diese einfache Betrachtung kann folglich der Radius respektive die wirksame Länge des Hebels 16 ermittelt werden, die benötigt wird, um die Bewegungssynchronisation zu erreichen.

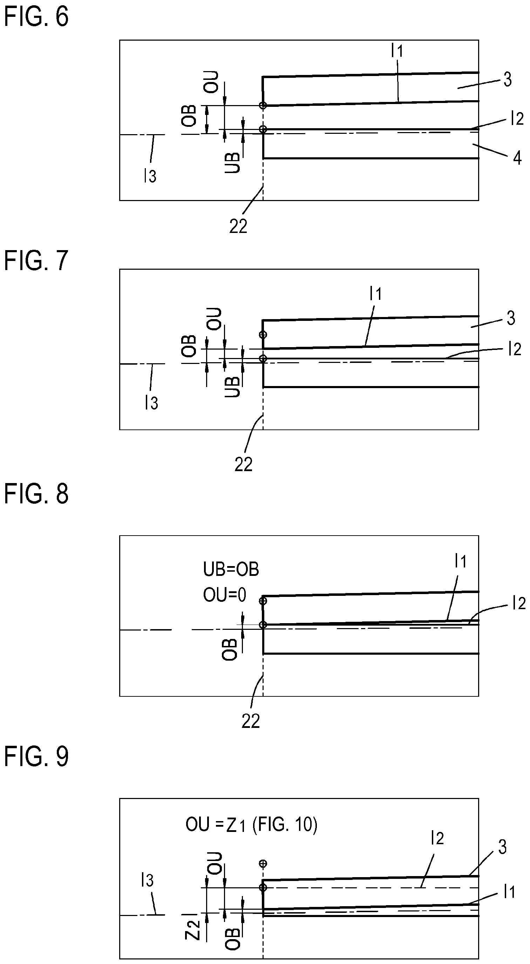

Die Fig. 6 - 9 zeigen in Form von vier Prinzipdarstellungen den Ablauf eines Schnitts während einer Bewegung des Kurbeltriebs 9 vom oberen Totpunkt OT in den unteren Totpunkt UT sowie zugehörig die Verstellung des Obertrumabschnitts 6b.

Gezeigt ist das Obermesser 3 und das Untermesser 4, wobei exemplarisch über $l_1$ wiederum die Unterkante des Obermessers 3 und $l_2$ die Oberkante des Untermessers 4 dargestellt ist. Mit $l_3$ ist schließlich der Verlauf der Oberseite des Obertrumabschnitts 6b angedeutet.

In Fig. 6 sei angenommen, dass das Obermesser 3 noch in Ruhe ist, sich also im oberen Totpunkt befindet. Ersichtlich ist ein großer Abstand OU zwischen den beiden Unter- und Oberkanten $l_1$ und $l_2$ im Punkt der Anschnittslinie 22, auf die die nachfolgende Betrachtung

In Fig. 6 sind des Weiteren mit OB der Abstand der Unterkante $l_1$ des Obermessers 3 zur Oberseite $l_3$ des Obertrumabschnitts 6b dargestellt sowie mit UB der Abstand der Oberkante des Untermessers zur Oberseite $l_3$ des Obertrumabschnitts 6b im Punkt der Anschnittslinie 22.

Fig. 7 zeigt die Situation, in der das Obermesser 3 bereits aus seiner angehobenen Position abgesenkt ist, das heißt, der Kurbeltrieb 9 wurde aus dem oberen Totpunkt herausgedreht. Ersichtlich nimmt der Abstand OU deutlich ab. Zu diesem Zeitpunkt beginnt die Verstellvorrichtung 13 damit, den Obertrumabschnitt 6b abzusenken, das heißt, dass der Kurbeltrieb 15 angedreht wird. Die Oberseite $l_3$ bewegt sich leicht nach unten, resultierend aus der Rotation des Hebels 16.

Fig. 8 zeigt die Situation unmittelbar beim Anschnitt. Die Unterkante $l_1$ des Obermessers 3 und die Oberkante $l_2$ des Untermessers 4 interagieren, das Band wird eingeschnitten. Das heißt, dass in diesem Zeitpunkt gilt, dass UB = OB, da die beiden Kanten auf gleicher Ebene sind, weshalb auch OU = 0 gilt.

Bei fortgesetzter Bewegung wird der Schnitt sodann über die Breite durchgeführt. Das Obermesser 3 wird immer weiter abgesenkt und schneidet das Band durch. Fig. 9 zeigt die Situation, in der das Obermesser 3 ganz abgesenkt ist, das heißt, dass sich der Hebel 11 am unteren Totpunkt UT befindet. Der Obertrumabschnitt 6b wurde, siehe den Verlauf der Oberseite $l_3$, maximal nach unten geschwenkt, die Unterkante $l_1$ des Obermessers 3 liegt deutlich unterhalb der Oberkante $l_2$ des Untermessers 4. Gleichwohl ist nach wie vor der Abstand der Unterkante $l_1$ zur Oberseite $l_3$ bezogen auf den seinerzeitigen Anschnittpunkt definiert durch die Linie 22 auch an dieser Position gleich. Wie Fig. 9 zeigt verlaufen die Linien $l_1$ und $l_3$ parallel zueinander.

Aus dieser Position heraus wird sodann das Obermesser 3 wieder angehoben in die die in Fig. 6 gezeigte Position. Nach Abtransport des abgeschnittenen Bandabschnitts wird auch das Unterstützungsbauteil 18 wieder angehoben, und mit ihm der Obertrumabschnitt 6b.

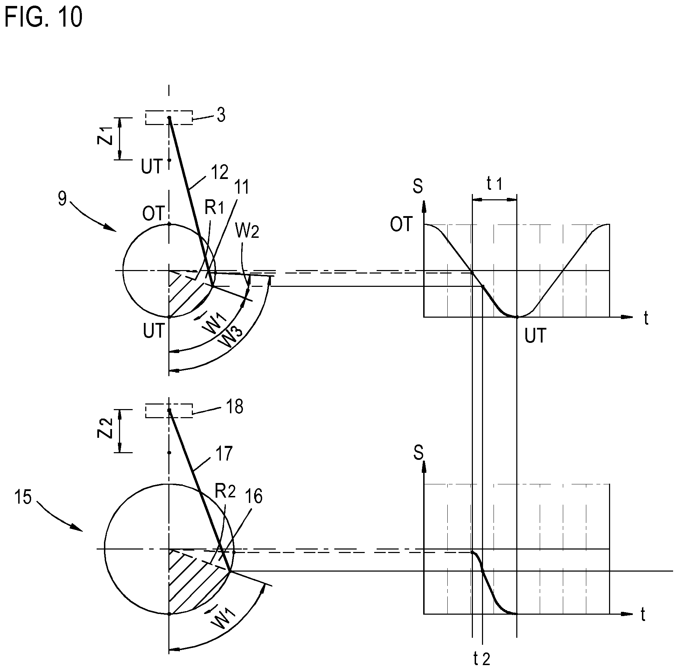

Fig. 10 zeigt mehrere Diagramme, aus denen die Zeit- und Geschwindigkeitsverhältnisse der Rotation der jeweiligen Hebel 11 und 16 ersichtlich sind.

Im oberen Teil von Fig. 10 ist links der Rotationswinkelbereich des Hebels 11 mit dem Radius R1 dargestellt. Angegeben ist jeweils der obere Totpunkt OT und der untere Totpunkt UT. Gezeigt ist ferner das Schubelement 12 sowie angedeutet das Obermesser 3. Rechts davon ist ein Diagramm dargestellt, an dem längs der Abszisse die Zeit t und längs der Ordinate die vom Obermesser 3 zurückgelegte Wegstrecke S aufgetragen ist.

In der unteren Figurenhälfte ist der Hebel 16 mit dem Radius R2 nebst Schubelement 17 dargestellt, sowie exemplarisch das Unterstützungsbauteil 18.

Rechts daneben ist auch hier ein Diagramm mit der vom Unterstützungsbauteil 18 zurückgelegte Wegstrecke S über der Zeit gezeigt.

Zum Zeitpunkt t = 0 bewegt sich der Kurbeltrieb 9 aus dem oberen Totpunkt OT heraus. Der Hebel 11 wird langsam beschleunigt, seine Winkelgeschwindigkeit nimmt zu. Gleichzeitig, siehe die rechts stehende Figur, nimmt die bewegte Strecke, um die das Obermesser 3 abgesenkt wird, mit zunehmender Beschleunigung zu. Mit konstanter Rotationsgeschwindigkeit und damit Winkelgeschwindigkeit nimmt die Strecke ab, bis sie, wenn der Hebel 11 um 90° verschwenkt ist, die Nulllinie des rechtsstehenden Diagramms schneidet.

Kurz nach diesem Zeitpunkt beginnt das nachfolgend betrachtete Intervall $t_1$, das sich ab diesem Zeitpunkt bis zum Erreichen des unteren Totpunkts UT erstreckt. Der gesamte Schwenkwinkelbereich zwischen diesem Punkt und dem unteren Totpunkt UT ist in Fig. 10 im linken oberen Diagramm mit $W_3$ dargestellt. Zu Beginn des Intervalls $t_1$, der gleichbedeutend mit dem Beginn des Schwenkwinkelabschnitts $W_2$ ist, der im Diagramm links oben in Fig. 10 dargestellt ist, beginnt auch die Verstelleinrichtung 13 ihre Arbeit, das heißt, der Antriebsmotor 14 dreht den Kurbeltrieb 15 an. Während mit fortgesetzter Verschwenkung des Hebels 11 dieser die Strecke ändert, wird zu Beginn des Intervalls $t_1$ der Hebel 16 erst beschleunigt, das heißt, dass die zurückgelegte Strecke erst langsam ansteigt und sich erst zum Zeitpunkt $t_2$ im Wesentlichen synchron zum Hebel 11 ändert.

Zum Zeitpunkt $t_2$ endet gemäß Fig. 10 im links oben dargestellten Diagramm der Schwenkwinkelabschnitt $W_2$, es beginnt der Schwenkwinkelabschnitt $W_1$, der in identischem Winkelumfang auch in dem zugeordneten Diagramm des Kurbeltriebs 15 dargestellt ist. Zum Zeitpunkt $t_2$ drehen sowohl der Hebel 11 als auch der Hebel 16 mit der gleichen Drehzahl, also bewegen sich mit der gleichen Winkelgeschwindigkeit. Beide Streckenänderungen verlaufen daher ab diesem Zeitpunkt nahezu synchron zueinander, bis zwangsläufig kurz vor Erreichen des unteren Totpunkts UT, wo die Streckenänderung zwangsläufig null ist.

Die beiden gegenüber gestellten Diagrammdarstellungen zeigen, dass aufgrund der gleichen Winkelgeschwindigkeit der Rotation der Hebel 11 und 16 sowie der entsprechenden Auslegung der Länge R2 des Hebels 16 die Streckenänderungen des Obermessers 3 sowie des Unterstützungsbauteils 18 synchronisiert werden können respektive derart gleich ausgelegt werden können, das sich in jedem über die Länge des Schnitts betrachteten Schnittpunkt der Abstand der Unterkante $l_1$ des Obermessers 3 zur Oberfläche $l_3$ des Obertumabschnitts 6b nicht ändet, also gleichbleibt.

Der Umstand, dass der Weg des Obermessers 3 um eine kürzere Strecke S gesehen über den gesamten Schnitt dargestellt ist, als die Verstellvorrichtung 13, jeweils bezogen auf den jeweiligen Kurbeltrieb, resultiert aus den unterschiedlichen Hebel- und Weglängen, die in die Auslegung der wirksamen Länge R2 des Hebels 16 eingehen, siehe vorstehend genannte Formel.

Mit $Z_1$ und $Z_2$ ist der jeweilige Hub des Obermessers 3 und des Unterstützungsbauteils 18 angegeben. Ersichtlich sind $Z_1$ und $Z_2$ gleich bezogen auf den Anschnittpunkt bzw. die Anschnittlinie 22.

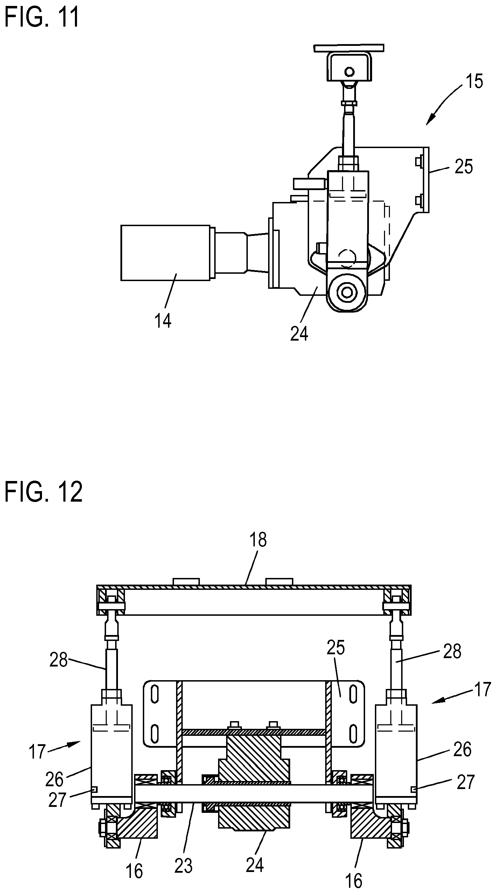

Die Fig. 11 und 12 zeigen zwei Darstellungen des Kurbeltriebs 15 nebst Antriebsmotor 14. Der Kurbeltrieb 15 umfasst zwei auf der Antriebswelle 23 drehfest mit dieser verbundene Hebel 16. Die Antriebswelle 23 ist über ein Getriebe 24 mit dem Antriebsmotor 14 verbunden, wobei das Getriebe an einer Konsole 25, die ihrerseits an einem positionsfesten Bauteil angeordnet ist, angeordnet ist.

An den beiden Hebeln 16 sind die beiden Schubelemente 17 angeordnet, bei denen es sich bei den in den Fig. 11 und 12 gezeigten Ausführungsbeispiel um zwei Gaszylinder 26 handelt, denen ein entsprechendes Überdruckventil 27 zugeordnet ist. Die beiden Gaszylinder 26 sind mit dem Zylinderkolben 28 am Unterstützungsbauteil 18 befestigt.

Im normalen Betrieb verhalten sich die beiden Gaszylinder 26 vollkommen starr. Sie heben also das Unterstützungsbauteil entsprechend der Rotation der Hebel 16 an oder senken es ab. Irgendeine Längenvariation der Gaszylinder 26 tritt hierbei nicht ein. Sollte es aus welchen Gründen auch immer im Betrieb zu einer ungewollten Kollision des Unterstützungsbauteils 18 mit dem abgesenkten Obermesser 3 kommen, so können die Gaszylinder 26 nachgeben, das heißt, dass die Kolben 28 in den Zylinder einfahren, worüber eine Beschädigung vermieden werden kann.

Die Hebel 16 sind derart ausgelegt, dass ihre wirksame Länge dem ermittelten Wert R2 entspricht.

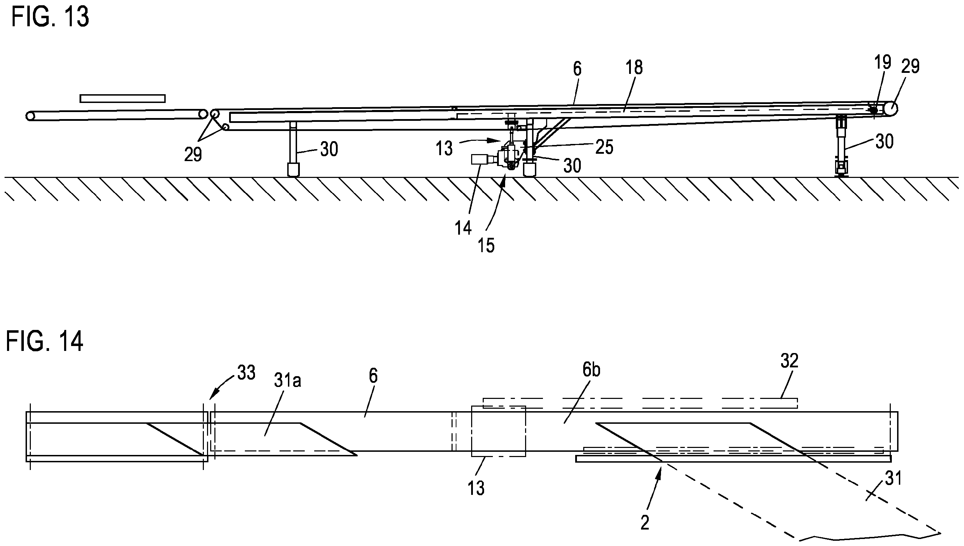

Die Fig. 13 und 14 zeigen eine Seitenansicht des Transportbandes 6, das über entsprechende Umlenkrollen 29 geführt ist. Die Rollen sind an einer entsprechenden Gestellkonstruktion, die über entsprechende Stützen 30 zum Boden hin abgestützt ist, angeordnet.

Gezeigt ist ferner die Verstelleinrichtung 13 mit dem Antriebsmotor 14 und dem Kurbeltrieb 15 sowie das hier abgesenkte Unterstützungsbauteil 18, beispielsweise ein Rahmen oder ein Unterstützungsblech, das um die Schwenkachse 19 verschwenkt werden kann. Ersichtlich ist die Konsole 25 an einem entsprechenden Gestellabschnitt befestigt.

Fig. 14 zeigt eine Aufsicht auf das Transportband 6. Dargestellt ist die Messeranordnung 2 sowie ein einlaufendes Endlosband 31, das mit ihr zu schneiden ist. Der Messeranordnung 2 zugeordnet ist eine Zugvorrichtung 32, mit der das Band 31 durch die Messeranordnung 2 gezogen werden kann. Angedeutet ist die Verstelleinrichtung 13 unterhalb des Transportbandes 6, um den Transportbandabschnitt 6b in entsprechender Weise zu verstellen.

Angeordnet ist des Weiteren lediglich exemplarisch eine nachgeschaltete Spleißeinrichtung 33, an der die geschnittenen Bandstreifen 31a miteinander verspleißt werden.

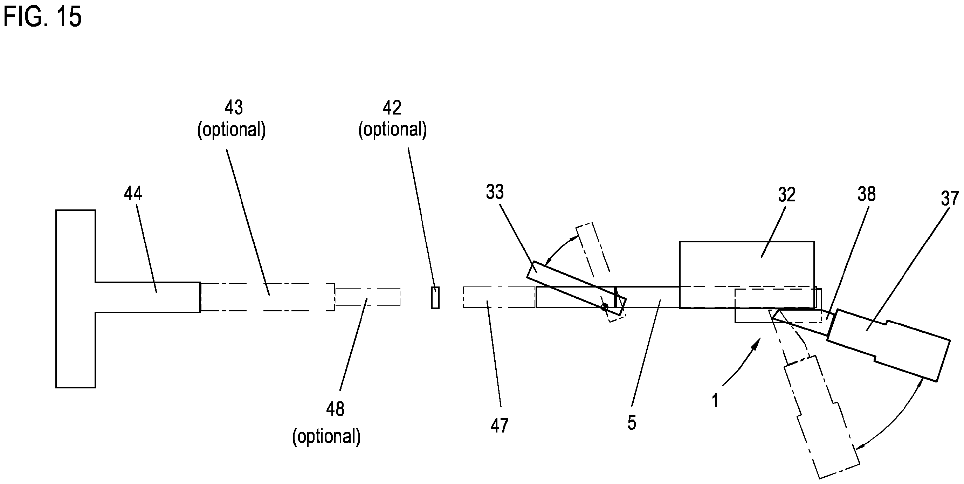

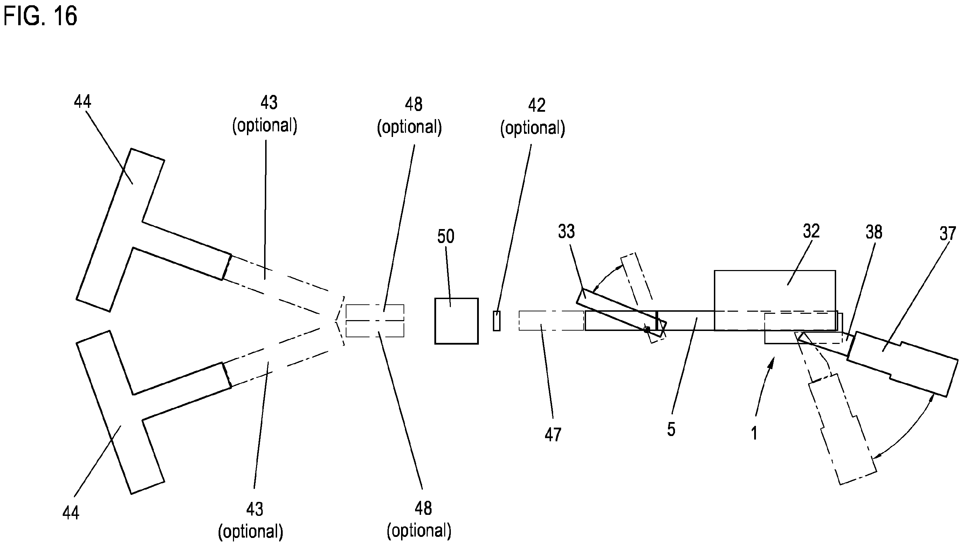

Die Figuren 15 und 16 zeigen verschiedene Layouts für Gesamtanlagen. Gleiche Anlagenkomponenten sind auch hier mit gleichen Bezugszeichen versehen. Die Ausführungen zu den Funktionen der einzelnen Anlagenkomponenten gelten, wenngleich detailliert nur zu einer Figur gegeben, auch für alle anderen in den Figuren beschriebenen Layoutbeispiele.

Fig. 15 zeigt ein beispielhaftes Layout für eine Gürtelanlage ohne Slitter.

Vorgesehen ist eine Abwickelstation 37, aus der das zu bearbeitende Cordband bezogen wird. In der Abwickelstation 37 werden in ein geeignetes Gestell die zu verarbeitenden Materialrollen eingehängt und ausgewickelt. Hierbei wird die zu verarbeitende gummierte Cordbahn von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann wie ausgeführt der Abwickler 37 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler transportiert wird. Diese Aufzählung ist nicht abschließend. Der Abwickler ist verschwenkbar.

Der Abwickelstation 37 folgt eine erfindungsgemäße Schneidvorrichtung 1, die zum Schneiden des von der Abwickelstation kommenden Cordbands dient. Die Schneidvorrichtung dient zum Abschneiden von Cordbandstreifen in einer definierten Breite und einem definierten Winkel.

Der Scherentisch dient als Materialunterstützung 38 und ist mit der Abwickelstation 37 verbunden und schwenkt im Bedarfsfall gemeinsam mit dieser. Das zu verarbeitende Material liegt auf dem Scherentisch und wird auf diesem liegend in die Schneidvorrichtung 1 gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schneidvorrichtung 1 eingelegt werden muss, oder falls zum Schwenken des Abwicklers das Material ein Stück weit aus der Schneidvorrichtung 1 zurückgezogen wurde.

Relevant für die Schneidvorrichtungsbauform ist der Ablauf nach dem Schneiden. Um das geschnittene Material mit wenigen Bearbeitungsschritten in den Folgeprozess einzubinden sind weitere Maschinenkomponenten im Einsatz (Bänder, Hochhalter, Spleißer, etc.). Dafür ist es erforderlich so nah wie möglich mit diesen Komponenten an das Untermesser und in das Maschinengestell zu bauen. Das Material sollte hierzu so wenig wie möglich bewegt werden (u.a. Fallhöhe), um es in geschnittener Ablageposition weiter zu verarbeiten.

Um das Material durch die Schneidvorrichtung 1 zu fördern, kommt die Zugvorrichtung 32 zum Einsatz. Die Zugvorrichtung 32 als Teil der Schneidvorrichtung 1 dient zum Fördern der Materialbahn in die Schneidvorrichtung 1 bzw. zieht das gegriffene Band durch die beiden Messer 3, 4, wie zuvor beschrieben. Die Schneidvorrichtung 1 weist ferner ein Transportband auf, das den geschnittenen Cordbandstreifen aufnimmt und ihn aus der Schneidvorrichtung 1 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandstreifen wird sodann auf das Transportband 6 gegeben und einer Spleißeinheit 33 zugeführt. Der Spleißer 33 dient zum Verbinden (rein mechanisch, ohne Zuhilfenahme von Zusatzstoffen) der zuvor geschnittenen Bandstreifen. Der Spleißer ist im Winkel verschwenkbar, um das Bandmaterial in verschiedenen Winkeln verarbeiten zu können.

Optional kann der Spleißvorrichtung 33 noch ein Band 47 zum Handspleißen, also zur manuellen Verbindung der Bandabschnitte nachgeschaltet sein. Während dieser manuellen Bearbeitung ist die automatische Spleißvorrichtung 33 außer Betrieb. Ein solches Handspleißen ist bei bestimmten Cordbandmaterialien, sehr schmalen Abschnittsbreiten oder auf Kundenwunsch erforderlich.

Optional kann auch eine Beruhigungsrolle 42 vorgesehen werden. Hierbei erfährt das Material durch den Transport über die Rolle eine Gegenbiegung, durch die Gegenbiegung zieht sich das Material in Längsrichtung zusammen. Hintergrund ist somit die Dehnung des Materials in Längsrichtung bei der Verarbeitung in der Spleißvorrichtung 33 zu reduzieren. Diese Rolle ist jedoch nicht zwingend vorzusehen. Weiterhin ist, ebenso optional, ein Reparaturband 48 vorgesehen. Sollten Fehler im Band erkannt werden, können sie hier repariert werden.

Gemäß Fig. 15 folgt sodann eine ebenfalls optionale Belegevorrichtung 43. In dieser Station werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante (= Schnittkante) freiliegenden Cordfäden zu ummanteln

In jedem Fall vorgesehen ist eine Aufwickelstation 44. In dieser Station werden die erfolgten Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

Fig. 16 zeigt schließlich ein Anlagenlayout für eine Gürtelanlage entsprechend Fig. 15, jedoch ist hier zusätzlich ein Slitter 50 integriert. Die hierüber erfolgte Trennung der gespleißten Materialbahn führt dazu, dass in jedem Fall zwei Aufwickelstationen 44 vorzusehen sind, denen jeweils optional jeweils eine Belegevorrichtung 43 und/oder ein Reparaturband 48 vorgeschaltet sein kann.

Wenngleich in sämtlichen Darstellungen das Band von rechts nach links gefördert wird ist es selbstverständlich möglich, das Layout auch in umgekehrter, spiegelbildlicher Ausführung auszulegen, also den Streifen von links nach rechts zu transportieren. Alle als optional beschriebenen Komponenten können in unterschiedlicher Kombination zusammen mit den wesentlichen Komponenten vorgesehen werden. Deshalb sind unterschiedliche Layouts aus allen beschriebenen Komponenten erstellbar.

### Patentansprüche

1. Schneideinrichtung zum Schneiden eines Endlosbands, insbesondere eines Stahl- oder Textilcordbands, umfassend eine Messeranordnung (2) umfassend ein über eine Antriebseinrichtung (7) bewegbares Obermesser (3) sowie ein diesem zugeordnetes positionsfestes Untermesser (4), sowie ein der Messeranordnung (2) nachgeschaltetes, einen geschnittenen Bandabschnitt aufnehmendes Transportband (5), das mit seinem Obertrum (6) unter einem Winkel zur Horizontalen verläuft, wobei ein im Bereich der Messeranordnung (2) befindlicher Abschnitt (6b) des Obertrums (6) mittels einer Verstelleinrichtung (13) umfassend ein unterhalb des Obertrums (6) angeordnetes, um eine Achse (19) schwenkbares Unterstützungsbauteil (18) zwischen der unter dem Winkel verlaufenden Stellung und einer im Wesentlichen horizontalen Stellung verstellbar ist, **dadurch gekennzeichnet, dass** sowohl die Antriebseinrichtung (7) als auch die Verstelleinrichtung (13) einen Antriebsmotor (8, 14) und einen über diesen betätigbaren Kurbeltrieb (7,15) umfasst.

2. Schneideinrichtung nach Anspruch 1, **dadurch gekennzeichnet, dass** der jeweilige Kurbeltrieb (7, 15) wenigstens einen über den Antriebsmotor (8, 14) bewegbaren Hebel (11, 16) sowie ein an diesem schwenkbar angeordnetes Schubelement (12, 17), das mit dem Obermesser (3) bzw. dem Unterstützungsbauteil (18) gekoppelt ist, umfasst.

3. Schneideinrichtung nach Anspruch 2, **dadurch ge-**

**kennzeichnet, dass** der jeweilige Antriebsmotor (8, 14) mit einer sich beidseits davon erstreckenden Antriebswelle (10, 23) gekoppelt ist, an der beidseits jeweils ein Hebel (11, 16) mit einen Schubelement (12, 17) angeordnet ist.

4. Schneideinrichtung nach Anspruch 2 oder 3, **dadurch gekennzeichnet, dass** die Antriebseinrichtung (7) derart ausgeführt ist, dass der Antriebsmotor (8) und damit der oder die Hebel (11) zur Durchführung eines Schnitts um 360° rotieren, und dass die Verstelleinrichtung (13) derart ausgeführt ist, dass der Antriebsmotor (14) und damit der oder die Hebel (16) um 360° oder nur um einen Winkel <180°, insbesondere um annähernd 90° rotieren.

5. Schneideinrichtung nach einem der Ansprüche 2 bis 4, **dadurch gekennzeichnet, dass** das oder die Schubelement (12) der Antriebseinrichtung (7) eine Schubstange ist, und dass das oder die Schubelemente (17) der Verstelleinrichtung (13) Schubstangen oder Druckzylinder (25) sind.

6. Schneideinrichtung nach einem der vorangehenden Ansprüche, **dadurch gekennzeichnet, dass** der Antriebsmotor (14) der Verstelleinrichtung (13) ein Servomotor ist.

7. Schneideinrichtung nach einem der Ansprüche 2 bis 6, **dadurch gekennzeichnet, dass** die beiden Kurbeltriebe (9, 15) über die beiden Antriebsmotoren (8, 14) derart betreibbar sind, dass zumindest während der Zeit zwischen dem Einschnitt des Obermessers (3) in das Band und dem Schnittende die Winkelgeschwindigkeit des oder der rotierenden Hebel (16) der Verstelleinrichtung (13) im Wesentlichen gleich der Winkelgeschwindigkeit des oder der rotierenden Hebel (11) der Antriebseinrichtung (7) ist.

8. Schneideinrichtung nach Anspruch 7, **dadurch gekennzeichnet, dass** die beiden Kurbeltriebe (9, 15) über die beiden Antriebsmotoren (8, 14) derart betreibbar sind, dass die Winkelgeschwindigkeiten bis zu dem Zeitpunkt, zu dem der oder die rotierenden Hebel (11) der Antriebseinrichtung (7) und der oder die rotierenden Hebel (16) der Verstelleinrichtung (13) gemeinsam den unteren Totpunkt erreichen, im Wesentlichen gleich ist.

9. Schneideinrichtung nach Anspruch 7 oder 8, **dadurch gekennzeichnet, dass** die Winkelgeschwindigkeiten um maximal 5%,insbesondere um maximal 2% voneinander abweichen.

10. Schneideinrichtung nach einem der Ansprüche 7 bis 9, **dadurch gekennzeichnet, dass** der ruhende Kurbeltrieb der Verstelleinrichtung (13) über den Antriebsmotor (14) eine definierte Zeitspanne vor dem Einschnitt des Obermessers (3) in das Band beschleunigbar ist, derart, dass die Winkelgeschwindigkeit des oder der rotierenden Hebel (16) der Verstelleinrichtung (13) im Zeitpunkt des Einschnitts im wesentlichen der Winkelgeschwindigkeit des oder der rotierenden Hebel (11) der Antriebseinrichtung (7) entspricht.

11. Schneideinrichtung nach einem der vorangehenden Ansprüche, **dadurch gekennzeichnet, dass** zumindest der Betrieb des Antriebsmotors (14) der Verstelleinrichtung (13) in Abhängigkeit des Erfassungsergebnisses wenigstens eines Sensorelements, das eine Information betreffend den Bewegungsbetrieb des Obermessers (3) oder des zu schneidenden Bands liefert, steuerbar ist.

12. Verfahren zum Betrieb einer Schneideinrichtung zum Schneiden eines Endlosbands, insbesondere eines Stahl- oder Textilcordbands, umfassend eine Messeranordnung (2) umfassend ein über eine Antriebseinrichtung (7) bewegbares Obermesser (3) sowie ein diesem zugeordnetes positionsfestes Untermesser (4), sowie ein der Messeranordnung (2) nachgeschaltetes, einen geschnittenen Bandabschnitt aufnehmendes Transportband (5), das mit seinem Obertrum (6) unter einem Winkel zur Horizontalen verläuft, wobei ein im Bereich der Messeranordnung (2) befindlicher Abschnitt (6b) des Obertrums (6) mittels einer Verstelleinrichtung (13) umfassend ein unterhalb des Obertrums (6) angeordnetes, um eine Achse (19) schwenkbares Unterstützungsbauteil (18) zwischen der unter dem Winkel verlaufenden Stellung und einer im wesentlichen horizontalen Stellung verstellbar ist, **dadurch gekennzeichnet, dass** sowohl die Antriebseinrichtung (7) als auch die Verstelleinrichtung (13) einen Antriebsmotor (8, 14) und einen Kurbeltrieb (7, 15) umfasst, wobei der jeweilige Antriebsmotor (8, 14) den jeweiligen Kurbeltrieb (7, 15) antreibt.

13. Verfahren nach Anspruch 12, **dadurch gekennzeichnet, dass** der jeweilige Kurbeltrieb einen oder zwei über den Antriebsmotor bewegbare, exzentrisch gelagerte Hebel sowie jeweils ein an diesem oder diesen schwenkbar angeordnete Schubelemente, das oder die mit dem Obermesser bzw. dem Unterstützungsbauteil gekoppelt sind, umfasst, wobei der Antriebsmotor der Antriebseinrichtung und damit der oder die Hebel zur Durchführung eines Schnitts um 360° rotieren, und wobei der Antriebsmotor der Verstelleinrichtung und damit der oder die Hebel um 360° oder nur um einen Winkel <180°, insbesondere um annähernd 90° rotieren.

14. Verfahren nach Anspruch 13, **dadurch gekennzeichnet, dass** die beiden Kurbeltriebe über die beiden Antriebsmotoren derart bewegt werden, dass zumindest während der Zeit zwischen dem Einschnitt des Obermessers in das Band und dem Schnittende die Winkelgeschwindigkeit des oder der rotierenden Hebel der Verstelleinrichtung im Wesentlichen gleich der Winkelgeschwindigkeit des oder der rotierenden Hebel der Antriebseinrichtung ist.

15. Verfahren nach Anspruch 14, **dadurch gekennzeichnet, dass** die beiden Kurbeltriebe über die beiden Antriebsmotoren derart bewegt werden, dass die Winkelgeschwindigkeit bis zu dem Zeitpunkt, zu dem der oder die rotierenden Hebel der Antriebseinrichtung und der oder die rotierenden Hebel der Verstelleinrichtung gemeinsam den unteren Totpunkt erreichen, im Wesentlichen gleich ist.

16. Verfahren nach Anspruch 14 oder 15, **dadurch gekennzeichnet, dass** die Winkelgeschwindigkeiten um maximal 5%, vorzugsweise um maximal 2% voneinander abweichen.

17. Verfahren nach einem der Ansprüche 14 bis 16, **dadurch gekennzeichnet, dass** der ruhende Kurbeltrieb der Verstelleinrichtung über den Antriebsmotor eine definierte Zeitspanne vor dem Einschnitt des Obermessers in das Band beschleunigt wird, so dass die Winkelgeschwindigkeit des oder der rotierenden Hebel der Verstelleinrichtung im Zeitpunkt des Einschnitts im wesentlichen der Winkelgeschwindigkeit des oder der Hebel der rotierenden Antriebseinrichtung entspricht.

18. Verfahren nach einem der Ansprüche 12 bis 17, **dadurch gekennzeichnet, dass** zumindest der Betrieb des Antriebsmotors der Verstelleinrichtung in Abhängigkeit des Erfassungsergebnisses wenigstens eines Sensorelements, das eine Information betreffend den Bewegungsbetrieb des Obermessers oder des zu schneidenden Bands liefert, gesteuert wird.

**Claims**

1. Cutting installation for cutting an endless tape, in particular a steel or textile cord tape, comprising a blade assembly (2) comprising an upper blade (3) that is movable by way of a drive installation (7) as well as a positionally fixed lower blade (4) that is assigned to said upper blade (3), and a transport belt (5) which is disposed downstream of the blade assembly (2), receives a cut tape portion, and by way of the upper lead (6) of said transport belt (5) runs at an angle to the horizontal, wherein a portion (6b) of the upper lead (6) that is situated in the region of the blade assembly (2), by means of an adjustment installation (13) comprising a support component (18) that is disposed below the upper lead (6) and is pivotable about an axis (19), is adjustable between the position running at an angle and a substantially horizontal position, **characterized in that** the drive installation (7) as well as the adjustment installation (13) comprise a drive motor (8, 14) and a crank mechanism (7, 15) that is activatable by way of said drive motor (8, 14).

2. Cutting installation according to Claim 1, **characterized in that** the respective crank mechanism (7, 15) comprises at least one lever (11, 16) that is movable by way of the drive motor (8, 14) as well as a thrust element (12, 17) which is disposed so as to be pivotable on said lever (11, 16) and is coupled to the upper blade (3) or the support component (18), respectively.

3. Cutting installation according to Claim 2, **characterized in that** the respective drive motor (8, 14) is coupled to a drive shaft (10, 23) that extends to both sides of said respective drive motor (8, 14), one lever (11, 16) having a thrust element (12, 17) being in each case disposed on both sides of said drive shaft (10, 23).

4. Cutting installation according to Claim 2 or 3, **characterized in that** the drive installation (7) is embodied in such a manner that the drive motor (8) and thus the lever or levers (11) for carrying out a cut rotate by 360°, and **in that** the adjustment installation (13) is embodied in such a manner that the drive motor (14) and thus the lever or the levers (11) rotate by 360°, or only by an angle <180°, in particular by approximately 90°.

5. Cutting installation according to one of Claims 2 to 4, **characterized in that** the thrust element or the thrust elements (12) of the drive installation (7) is/are a thrust bar, and **in that** the thrust element or the thrust elements (17) of the adjustment installation (13) is/are thrust bars or a pressure cylinder (25).

6. Cutting installation according to one of the preceding claims, **characterized in that** the drive motor (14) of the adjustment installation (13) is a servomotor.

7. Cutting installation according to one of Claims 2 to 6, **characterized in that** the two crank mechanisms (9, 15) by way of the two drive motors (8, 14) are capable of being operated in such a manner that the angular speed of the rotating lever or levers (16) of the adjustment installation (13) at least during the time between the upper blade (3) cutting into the tape and the end of the cut is substantially identical to the angular speed of the rotating lever or levers (11) of the drive installation (7).

8. Cutting installation according to Claim 7, **character-**

**ized in that** the two crank mechanisms (9, 15) by way of the two drive motors (8, 14) are capable of being operated in such a manner that the angular speeds is substantially identical up to the point in time at which the rotating lever or levers (11) of the drive installation (7) and the rotating lever or levers (16) of the adjustment installation (13) collectively reach the lower dead centre.

9. Cutting installation according to Claim 7 or 8, **characterized in that** the angular speeds deviate from one another by at most 5%, in particular by at most 2%.

10. Cutting installation according to one of Claims 7 to 9, **characterized in that**, a defined temporal interval prior to the upper blade (3) cutting into the tape, the resting crank mechanism of the adjustment installation (13) by way of the drive motor (14) is capable of being accelerated in such a manner that the angular speed of the rotating lever or levers (16) of the adjustment installation (13) at the point in time of cutting corresponds substantially to the angular speed of the rotating lever or levers (11) of the drive installation (7).

11. Cutting installation according to one of the preceding claims, **characterized in that** at least the operation of the drive motor (14) of the adjustment installation (13) is capable of being controlled as a function of the detected result of at least one sensor element which supplies an item of information pertaining to the moving operation of the upper blade (3) or of the tape to be cut.

12. Method for operating a cutting installation for cutting an endless tape, in particular a steel or textile cord tape, comprising a blade assembly (2) comprising an upper blade (3) that is movable by way of a drive installation (7) as well as a positionally fixed lower blade (4) that is assigned to said upper blade (3), and a transport belt (5) which is disposed downstream of the blade assembly (2), receives a cut tape portion, and by way of the upper lead (6) of said transport belt (5) runs at an angle to the horizontal, wherein a portion (6b) of the upper lead (6) that is situated in the region of the blade assembly (2), by means of an adjustment installation (13) comprising a support component (18) that is disposed below the upper lead (6) and is pivotable about an axis (19), is adjustable between the position running at an angle and a substantially horizontal position, **characterized in that** the drive installation (7) as well as the adjustment installation (13) comprise a drive motor (8, 14) and a crank mechanism (7, 15), wherein the respective drive motor (8, 14) drives the respective crank mechanism (7, 15).

13. Method according to Claim 12, **characterized in that** the respective crank mechanism comprises one or two eccentrically mounted levers that are movable by way of the drive motor, as well as a respective thrust element which is/are disposed on said lever or levers in a pivotable manner and is/are coupled to the upper blade or the support component, respectively, wherein the drive motor of the drive installation and thus the lever or the levers for carrying out a cut rotate by 360°, and wherein the drive motor of the adjustment device and thus the lever or the levers rotate by 360°, or only by an angle <180°, in particular by approximately 90°.

14. Method according to Claim 13, **characterized in that** the two crank mechanisms by way of the two drive motors are moved in such a manner that the angular speed of the rotating lever or levers of the adjustment installation, at least during the time between the upper blade cutting into the tape and the end of the cut is substantially identical to the angular speed of the rotating lever or levers of the drive installation.

15. Method according to Claim 14, **characterized in that** the two crank mechanisms by way of the two drive motors are moved in such a manner that the angular speed is substantially identical up to the point in time at which the rotating lever or levers of the drive installation and the rotating lever or levers of the adjustment installation collectively reach the lower dead centre.

16. Method according to Claim 14 or 15, **characterized in that** the angular speeds deviate from one another by at most 5%, preferably by at most 2%.

17. Method according to one of Claims 14 to 16, **characterized in that**, a defined temporal interval prior to the upper blade cutting into the tape, the resting crank mechanism of the adjustment installation by way of the drive motor is accelerated such that the angular speed of the rotating lever or levers of the adjustment installation at the point in time of cutting corresponds substantially to the angular speed of the lever or the levers of the rotating drive installation.

18. Method according to one of Claims 12 to 17, **characterized in that** at least the operation of the drive motor of the adjustment installation is controlled as a function of the detected result of at least one sensor element which supplies an item of information pertaining to the moving operation of the upper blade or of the tape to be cut.

**Revendications**

1. Dispositif de coupe permettant de couper une bande sans fin, en particulier une bande de câble textile ou d'acier, comprenant un agencement de couteaux (2) comprenant un couteau supérieur (3) déplaçable par le biais d'un dispositif d'entraînement (7) et un couteau inférieur (4) fixé en position, associé à celui-ci, ainsi qu'une bande transporteuse (5) montée en aval de l'agencement de couteaux (2), recevant une portion de bande coupée, qui s'étend avec son tronçon supérieur (6) suivant un certain angle par rapport à l'horizontale, une portion (6b) du tronçon supérieur (6) se trouvant dans la région de l'agencement de couteaux (2) pouvant être déplacée entre la position s'étendant suivant cet angle et une position essentiellement horizontale, au moyen d'un dispositif de réglage (13) comprenant un composant de support (18) disposé sous le tronçon supérieur (6), pouvant pivoter autour d'un axe (19), **caractérisé en ce que** le dispositif d'entraînement (7) ainsi que le dispositif de réglage (13) comprennent un moteur d'entraînement (8, 14) et un entraînement à manivelle (7, 15) pouvant être actionné par le biais de celui-ci.

2. Dispositif de coupe selon la revendication 1, **caractérisé en ce que** l'entraînement à manivelle respectif (7, 15) comprend au moins un levier (11, 16) pouvant être déplacé par le biais du moteur d'entraînement (8, 14) ainsi qu'un élément de poussée (12, 17) disposé de manière à pouvoir pivoter sur celui-ci, qui est accouplé au couteau supérieur (3) ou au composant de support (18).

3. Dispositif de coupe selon la revendication 2, **caractérisé en ce que** le moteur d'entraînement respectif (8, 14) est accouplé à un arbre d'entraînement (10, 23) s'étendant de chaque côté de celui-ci, au niveau duquel est disposé, de chaque côté, un levier respectif (11, 16) avec un élément de poussée (12, 17).

4. Dispositif de coupe selon la revendication 2 ou 3, **caractérisé en ce que** le dispositif d'entraînement (7) est réalisé de telle sorte que le moteur d'entraînement (8) et par conséquent le ou les leviers (11), tournent de 360° pour effectuer une coupe, et **en ce que** le dispositif de réglage (13) est réalisé de telle sorte que le moteur d'entraînement (14) et par conséquent le ou les leviers (16) tournent de 360° ou de seulement un angle inférieur à 180°, en particulier approximativement de 90°.

5. Dispositif de coupe selon l'une quelconque des revendications 2 à 4, **caractérisé en ce que** le ou les éléments de poussée (12) du dispositif d'entraînement (7) sont des tiges de poussée et **en ce que** le ou les éléments de poussée (17) du dispositif de réglage (13) sont des tiges de poussée ou des cylindres de compression (25).

6. Dispositif de coupe selon l'une quelconque des revendications précédentes, **caractérisé en ce que** le moteur d'entraînement (14) du dispositif de réglage (13) est un servomoteur.

7. Dispositif de coupe selon l'une quelconque des revendications 2 à 6, **caractérisé en ce que** les deux entraînements à manivelle (9, 15) peuvent être entraînés par le biais des deux moteurs d'entraînement (8, 14) de telle sorte qu'au moins pendant le temps entre l'entaille du couteau supérieur (3) dans la bande et la fin de la découpe, la vitesse angulaire du ou des leviers rotatifs (16) du dispositif de réglage (13) soit essentiellement égale à la vitesse angulaire du ou des leviers rotatifs (11) du dispositif d'entraînement (7).

8. Dispositif de coupe selon la revendication 7, **caractérisé en ce que** les deux entraînements à manivelle (9, 15) peuvent être entraînés par le biais des deux moteurs d'entraînement (8, 14) de telle sorte que les vitesses angulaires jusqu'à l'instant auquel le ou les leviers rotatifs (11) du dispositif d'entraînement (7) et le ou les leviers rotatifs (16) du dispositif de réglage (13) atteignent ensemble le point mort bas, soit essentiellement égale.

9. Dispositif de coupe selon la revendication 7 ou 8, **caractérisé en ce que** les vitesses angulaires s'écartent l'une de l'autre de 5 % au maximum, en particulier de 2 % au maximum.

10. Dispositif de coupe selon l'une quelconque des revendications 7 à 9, **caractérisé en ce que** l'entraînement à manivelle au repos du dispositif de réglage (13) peut être accéléré par le biais du moteur d'entraînement (14) pendant une période de temps définie avant l'entaille du couteau supérieur (3) dans la bande, de telle sorte que la vitesse angulaire du ou des leviers rotatifs (16) du dispositif de réglage (13) à l'instant de l'entaille corresponde essentiellement à la vitesse angulaire du ou des leviers rotatifs (11) du dispositif d'entraînement (7).

11. Dispositif de coupe selon l'une quelconque des revendications précédentes, **caractérisé en ce qu'**au moins le fonctionnement du moteur d'entraînement (14) du dispositif de réglage (13) peut être commandé en fonction du résultat de la détection d'au moins un élément de capteur qui fournit une information concernant le mode de déplacement du couteau supérieur (3) ou de la bande à découper.

12. Procédé pour faire fonctionner un dispositif de coupe permettant de couper une bande sans fin, en particulier une bande de câble textile ou d'acier, comprenant un agencement de couteaux (2) comprenant un couteau supérieur (3) déplaçable par le biais d'un dispositif d'entraînement (7) et un couteau inférieur (4) fixé en position, associé à celui-ci, ainsi qu'une bande transporteuse (5) montée en aval de l'agencement de couteaux (2), recevant une portion de bande coupée, qui s'étend avec son tronçon supérieur (6) suivant un certain angle par rapport à l'horizontale, une portion (6b) du tronçon supérieur (6) se trouvant dans la région de l'agencement de couteaux (2) pouvant être déplacée entre la position s'étendant suivant cet angle et une position essentiellement horizontale, au moyen d'un dispositif de réglage (13) comprenant un composant de support (18) disposé sous le tronçon supérieur (6), pouvant pivoter autour d'un axe (19), **caractérisé en ce que** le dispositif d'entraînement (7) ainsi que le dispositif de réglage (13) comprennent un moteur d'entraînement (8, 14) et un entraînement à manivelle (7, 15), le moteur d'entraînement respectif (8, 14) entraînant l'entraînement à manivelle respectif (7, 15).

13. Procédé selon la revendication 12, **caractérisé en ce que** l'entraînement à manivelle respectif comprend un ou deux leviers supportés de manière excentrique, déplaçables par le biais du moteur d'entraînement, ainsi qu'un élément de poussée respectif disposé sur celui-ci ou sur ceux-ci de manière pivotante, lequel ou lesquels est ou sont accouplés au couteau supérieur ou au composant de support, le moteur d'entraînement du dispositif d'entraînement et par conséquent le ou les leviers tournant de 360° pour effectuer une coupe, et le moteur d'entraînement du dispositif de réglage, et par conséquent le ou les leviers, tournant de 360° ou de seulement un angle inférieur à 180°, en particulier approximativement de 90°.

14. Procédé selon la revendication 13, **caractérisé en ce que** les deux entraînements à manivelle sont déplacés par le biais des deux moteurs d'entraînement de telle sorte qu'au moins pendant le temps entre l'entaille du couteau supérieur dans la bande et la fin de la découpe, la vitesse angulaire du ou des leviers rotatifs du dispositif de réglage soit essentiellement égale à la vitesse angulaire du ou des leviers rotatifs du dispositif d'entraînement.

15. Procédé selon la revendication 14, **caractérisé en ce que** les deux entraînements à manivelle sont déplacés par le biais des deux moteurs d'entraînement de telle sorte que la vitesse angulaire jusqu'à l'instant auquel le ou les leviers rotatifs du dispositif d'entraînement et le ou les leviers rotatifs du dispositif de réglage atteignent ensemble le point mort bas, soit essentiellement égale.

16. Procédé selon la revendication 14 ou 15, **caracté-**

**risé en ce que** les vitesses angulaires s'écartent l'une de l'autre de 5 % au maximum, en particulier de 2 % au maximum.

17. Procédé selon l'une quelconque des revendications 14 à 16, **caractérisé en ce que** l'entraînement à manivelle au repos du dispositif de réglage est accéléré par le biais du moteur d'entraînement pendant une période de temps définie avant l'entaille du couteau supérieur dans la bande, de telle sorte que la vitesse angulaire du ou des leviers rotatifs du dispositif de réglage à l'instant de l'entaille corresponde essentiellement à la vitesse angulaire du ou des leviers du dispositif d'entraînement rotatif.

18. Procédé selon l'une quelconque des revendications 12 à 17, **caractérisé en ce qu'**au moins le fonctionnement du moteur d'entraînement du dispositif de réglage est commandé en fonction du résultat de la détection d'au moins un élément de capteur qui fournit une information concernant le mode de déplacement du couteau supérieur ou de la bande à découper.

FIG. 1

EP 3 398 740 B1

FIG. 2

EP 3 398 740 B1

FIG. 3

EP 3 398 740 B1

FIG. 4

EP 3 398 740 B1

FIG. 5

EP 3 398 740 B1

FIG. 6

FIG. 7

FIG. 8

UB=OB
OU=0

FIG. 9

OU = Z1 (FIG. 10)

FIG. 10

FIG. 11

FIG. 12

FIG. 13

FIG. 14

EP 3 398 740 B1

EP 3 398 740 B1

FIG. 15

26

FIG. 16

44

43
(optional)

48
(optional)

42
(optional)

50

33

32

38

37

47

5

1

44

43
(optional)

48
(optional)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007025384 B3